(19) Europäisches Patentamt
European Patent Office
Office européen des brevets

(11) **EP 2 442 387 B1**

(12) **FASCICULE DE BREVET EUROPEEN**

(45) Date de publication et mention de la délivrance du brevet:
**10.03.2021 Bulletin 2021/10**

(21) Numéro de dépôt: **11167699.5**

(22) Date de dépôt: **21.09.2001**

(51) Int Cl.:
*H01M 4/48* (2010.01)     *H01M 4/136* (2010.01)
*H01G 9/00* (2006.01)     *C01B 25/45* (2006.01)
*C01B 17/96* (2006.01)     *H01M 4/62* (2006.01)
*H01M 4/58* (2010.01)     *C01B 33/20* (2006.01)
*C01B 25/37* (2006.01)     *H01M 4/36* (2006.01)
*H01M 4/485* (2010.01)     *H01M 4/525* (2010.01)
*H01M 10/052* (2010.01)     *H01M 10/0525* (2010.01)

(54) **Procédé de synthèse de matériau à base de LIxM1-yM'y(XO4)n**

Syntheseverfahren von Material auf Basis von LIxM1-yM'(XO4)N

Synthesis method for carbon material based on LIxM1-yM'(XO4)N

(84) Etats contractants désignés:
**AT BE CH CY DE DK ES FI FR GB GR IE IT LI LU MC NL PT SE TR**

(30) Priorité: **26.09.2000 CA 2320661**

(43) Date de publication de la demande:
**18.04.2012 Bulletin 2012/16**

(62) Numéro(s) de document de la (des) demande(s) initiale(s) en application de l'article 76 CBE:
**01973907.7 / 1 325 526**

(73) Titulaires:
• **Hydro-Québec**
**Montréal,**
**Québec H2Z 1A4 (CA)**
• **Université de Montréal**
**Montréal, QC H3T 1J4 (CA)**
• **Centre National de la Recherche Scientifique**
**75016 Paris (FR)**

(72) Inventeurs:
• **Armand, Michel**
**75014 Paris (FR)**
• **Gauthier, Michel**
**La Prairie, Québec J5R 1E6 (CA)**
• **Magnan, Jean-François**
**Neuville, Québec G0R 2R0 (CA)**
• **Ravet, Nathalie**
**Montreal, Québec H2L 4A5 (CA)**

(74) Mandataire: **Berger, Axel Bernhard et al**
**Bardehle Pagenberg Partnerschaft mbB**
**Patentanwälte, Rechtsanwälte**
**Prinzregentenplatz 7**
**81675 München (DE)**

(56) Documents cités:
**EP-A- 1 049 182**     **EP-A- 1 094 532**
**CA-A1- 2 307 119**     **US-B2- 7 550 098**

EP 2 442 387 B1

**Description**

DOMAINE DE L'INVENTION

La présente invention concerne une méthode de préparation de matériaux d'électrode capables de permettre des réactions rédox par échange d'ions alcalins et d'électrons. Les applications sont dans le domaine des générateurs électrochimiques (batteries) primaires ou secondaires, des générateurs supercapacités et dans le domaine des systèmes de modulation de la lumière de type électrochrome.

ART ANTÉRIEUR

Les composés d'insertion de formule $UMPO_4$ de structure olivine où M est un cation métallique appartenant à la première ligne des métaux de transition par exemple Mn, Fe, Co ou Ni, sont connus et leur utilisation comme matériau de cathode dans les batteries au lithium a été rapporté par Goodenough et al. dans le brevet US-A-5.910.382. Dans la demande canadienne de brevet portant le numéro CA-A-2.307.119, la généralité des composés "de type $LiMPO_4$" a été précisée dans la mesure où tout en gardant sensiblement la même structure olivine, une partie des atomes M peut être substituée par d'autres métaux de valence comprise entre 2 et 3, dont les éléments de transition voisins ou une partie du phosphore, peut être substitué par des éléments tels que Si, S, Al, As. De même, le lithium permettant l'électroneutralité peut occuper une fraction ou la totalité des sites octaédriques de la structure olivine, ou éventuellement se placer en position interstitielle lorsque la totalité des sites octaédriques est occupée.

La formule $Li_{x+y}M_{1-(y+d+t+q+r)}D_dT_tQ_qR_r[PO_4]_{1-(p+s+v)}[SO_4]_p[SiO_4]_s[VO_4]$ dans laquelle :

- M peut être $Fe^{2+}$ ou $Mn^{2+}$ ou un mélange des deux;
- D peut être un métal dans l'état d'oxydation +2 choisi dans le groupe contenant $Mg^{2+}$, $Ni2^+$, $Co^{2+}$, $Zn2+$, $Cu^{2+}$, et $Ti^{2+}$;
- T peut est un métal dans l'état d'oxydation +3 choisi dans le groupe contenant $Al^{3+}$, $Ti^{3+}$, $Cr^{3+}$, $Fe^{3+}$, $Mn^{3+}$, $Ga^{3+}$ et $V^{3+}$;
- Q est un métal dans le degré d'oxydation +4 choisi dans le groupe contenant $Ti^{4+}$, $Ge^{4+}$, $Sn^{4+}$ et $V^{4+}$; et
- R est un métal dans l'état d'oxydation +5 choisi dans le groupe contenant $V^{5+}$, $Nb^{5+}$ et $Ta^{5+}$,

avec une définition des valeurs prises par les paramètres x, y, d, t, q, r, p, s et v englobe la généralité du sens à donner au terme "de type $Li_xMXO_4$, $0 \leq x \leq 2$ " de structure olivine au sens de la présente invention et sera utilisée dans ce qui suit. Les substituants préférés du phosphore sont le silicium et le soufre.

Dans ces composés préparés sous forme lithiés (à l'état déchargé), au moins un des métaux de transition est à l'état d'oxydation II. Dans le brevet US-A-5.910.382 et sa CIP) ainsi que dans les brevets et publications suivants, les synthèses des composés $LiMPO_4$ sont toutes réalisées à partir d'un sel du métal de transition M correspondant au degré d'oxydation II et en conservant cet état d'oxydation tout au long de la synthèse jusqu'au produit final. L'élément de transition dont on maintient la valence II tout au cours de la synthèse, quelle que soit la voie suivie, est le fer dont la plupart des composés s'oxydent spontanément. À l'air par exemple, $LiFePO_4$ a été réalisée par réaction à l'état solide, à haute température et sous atmosphère inerte des divers constituants (par exemple pour la source de fer, $Fe(OOCCH_3)_2$, la source de phosphate, $NH_4H_2PO_4$ et celle de lithium, $Li_2CO_3$). Dans tous les cas, la source de fer est un sel dans lequel le fer est à l'état d'oxydation II, que ce soit à partir d'acétate de fer II comme décrit dans le brevet US-A-5.910.382, d'oxalate de fer II comme décrit dans Electrochem and Solid-State Letters, 3, 66 (2000) et dans Proc. 10th IMLB, Como, Italy, May (2000) ou de vivianite ($Fe_3(PO_4)_2 8H_2O$) comme décrit dans la demande canadienne de brevet CA-A-2.270.771, la sensibilité du fer II vis-à-vis de l'oxydation par l'oxygène rend tous ces processus de synthèse très délicats et toutes les précautions doivent être prises pour supprimer totalement la présence d'oxygène et notamment lors du traitement thermique, ce qui augmente le coût du matériau correspondant Cette sensibilité donne lieu a une irreproductibilité du comportement électrochimique des échantillons. Ce problème est souligné dans Yamada et al. J. electrochem Soc., 148, A224 (2001). Par ailleurs, le fer est l'élément le plus utile, de par son abondance et absence de toxicité, et la principale mise en oeuvre de l'invention est destinée à une préparation améliorée de composés rédox contenant cet élément. Il est évident que les résultats de l'invention s'appliquent au manganèse, au vanadium, au cobalt, au titane, au vanadium etc. dans des conditions correspondantes à leur degré d'oxydation voulu. D'une manière générale, le précurseur du métal M moins coûteux ou plus facile à manipuler ne correspond pas au degré d'oxydationa celui requis dans la formule du matériau rédox.

Une amélioration de ces composés a précédemment été proposée dans le brevet CA-A-2.270.771). Dans ce document, il a été montré que les performances électrochimiques de $LiFePO_4$ étaient grandement améliorées que ce soit en terme de capacité réversible, de cyclabilité ou de puissance, lorsque les particules du matériau sont recouvertes d'une fine couche de carbone conducteur électronique. Dans cette demande, les inventeurs ont mis à profit le fait d'utiliser un sel de fer à l'état d'oxydation II, en présence d'un composé organique susceptible d'être pyrolysé, dans les conditions de la synthèse, sans toutefois que le résidu de carbone ne puisse être oxydé à cause du faible pouvoir oxydant du composé ferreux ou de l'atmosphère en équilibre avec ce dernier.

La demande de brevet EP-A-1.094.532 décrit une méthode pour la production de matériaux pour une électrode positive active. Cette méthode inclut une étape de mélange d'une pluralité de substances pour obtenir un précurseur. Puis le précurseur est fritté pour aboutir à la synthèse d'un composé de formule $Li_x M_y PO_4$ dans lequel x est supérieur à 0 et inférieur ou égal à 2, y est supérieur ou égal à 0,8 et inférieur ou égal à 1,2 et M inclus au moins un métal ayant des orbitales 3d. Un agent réducteur solide est ajouté au cours de l'étape de mélange audit précurseur afin de permettre la préparation, qui s'effectue sous atmosphère inerte, de matériau pour électrodes positives actives capables de doper et de dédoper de façon satisfaisante et réversible le lithium.

EP-A-1.094.533 décrit un électrolyte non-aqueux adapté pour les batteries secondaires utilisant un matériau ou une électrode active contenant un composé représenté par la formule générale $Li_xMyPO_4$, dans laquelle x est supérieur à 0 et inférieur ou égal à 2, et y est supérieur ou égal à 0,8 et inférieur ou égal à 1,2, avec M contenant un état de transition 3d, la taille des grains de $Li_xM_yPO_4$ n'est pas supérieure à 10 micromètres. Cet électrolyte non aqueux pour batteries secondaires est présenté comme possédant des caractéristiques cycliques améliorées et une haute de capacité.

La demande internationale PCT référencée WO 01/53198 décrit un matériau, à base de composé mixte lithium métal, qui libère par interaction électrochimique des ions lithium. Ce matériau est préparé à partir des précurseurs nécessaires par réduction d'au moins un des ions métalliques par du carbone

US 7,550,098 concerne des procédés de production de matériaux actifs d'électrodes qui peuvent être utilisés dans la production des électrodes destinées à être utilisées dans des cellules électrochimiques de batteries. Les procédés comprennent une réaction d'un composé métallique avec une source de carbone à l'état solide afin de produire les dits matériaux actifs.

Outre leur performance électrochimique dans les accumulateurs au lithium, l'intérêt de cette nouvelle famille de matériaux est de mettre en jeu des éléments non-toxiques, abondants et peu coûteux à extraire. Ces caractéristiques sont déterminantes pour le développement de gros accumulateurs au lithium applicables notamment au marché du véhicule électrique dont le besoin devient pressant avec l'accumulation dans l'environnement des gaz à effet de serre.

Il existe donc un besoin pour la mise au point d'un nouveau procédé plus simple et plus reproductible, moins onéreux que ceux déjà connus tout en offrant des performances améliorées.

## RÉSUMÉ DE L'INVENTION

La présente invention décrit un procédé de synthèse de composés de formule $Li_xM_{1-y}M'_y(XO_4)_n$, par mise en équilibre dans les proportions requises d'un mélange comprenant des précurseurs des constituants du composé et la réduction du mélange équilibré des précurseurs avec une atmosphère gazeuse réductrice. Le matériau ainsi obtenu possède une excellente conductivité.

Ces matériaux sont utilisables pour la préparation notamment de cellules électrochimiques comprenant un électrolyte et au moins deux électrodes dont au moins une comprend au moins un matériau synthétisé selon un des procédés de l'invention.

## BRÈVE DESCRIPTION DES DESSINS

Légendes des figures citées dans les exemples

**Figure 1 :** $1^{er}$ cycle obtenus par voltammétrie lente (v = 20 mV.h$^{-1}$) à 80°C pour une batterie contenant $LiFePO_4$ non carboné synthétisé à partir de $FePO_4.2H_2O$ (réduction par l'hydrogène) (traits pleins) comparé au même échantillon après carbonisation (traits pointillés)

**Figure 2 :** Morphologie de $LiFePO_4$ carboné synthétisé à partir de $FePO_4.2H_2O$ (réduction par l'hydrogène). Micrographie prise au microscope électronique à balayage grossissement $\times$ 5.000

**Figure 3:** $5^{ème}$ cycle obtenu par voltammétrie lente (v = 20 mV.h$^{-1}$) à 80°C d'une batterie contenant $LiFePO_4$ carboné synthétisé à partir de $FePO_4.2H_2O$ (réduction par l'hydrogène) (traits pleins) comparé un $LiFePO_4$ obtenu par synthèse classique suivi d'un étape de dépôt de carbone(traits pointillés).

**Figure 4 :** Profils de charge et de décharge réalisés en mode galvanostatique à 80°C et à deux vitesses de charge et décharge (C/8 : traits pleins et C/2 traits pointillés) pour des batteries contenant $LiFePO_4$ carboné synthétisé à partir de $FePO_4.2H_2O$ (réduction par l'hydrogène)

**Figure 5 :** résultats de cyclages réalisés en mode galvanostatique à 80°C et à deux vitesses de charge et décharge pour des batteries contenant LiFePO$_4$ carboné synthétisé à partir de PePO$_4$.2H$_2$O (réduction par l'hydrogène).

**Figure 6 :** 5$^{ème}$ cycle obtenu par voltammétrie lente (v = 20 mV.h$^{-1}$) à 80°C de batteries contenant LiFePO$_4$ carboné synthétisé à partir de FePO$_4$.2H$_2$O (réduction par CO/CO$_2$). 1/1) pour des échantillons contenants différents pourcentages de carbone (0.62% : traits pleins, 1.13 % traits pointillés, 135% traits gras).

**Figure 7:** 1$^{er}$ cycle (traits pointillés) et 10$^{ème}$ cycle (traits pleins) obtenu par voltammétrie lente (v = 20 mV.h$^{-1}$) à 80°C d'une batterie contenant LiFePO$_4$ synthétisé à partir de FePO$_4$.2H$_2$O (réduction par le carbone).

**Figure 8 :** Evolution de la capacité au cours du cyclage, d'une batterie contenant LiFePO$_4$ synthétisé à partir de FePO$_4$.2H$_2$O (réduction par le carbone). Résultats obtenus par voltammétrie lente (v=20 mV.h$^{-1}$) à 80°C.

**Figure 9:** 1$^{er}$ cycle (traits pointillés) et 10$^{ème}$ cycle (traits pleins) obtenu par voltammétrie lente (v =20 mV.h$^{-1}$) à 80°C d'une batterie contenant LiFePO$_4$ synthétisé à partir de FePO$_4$.2H$_2$O (réduction par l'acétate de cellulose)

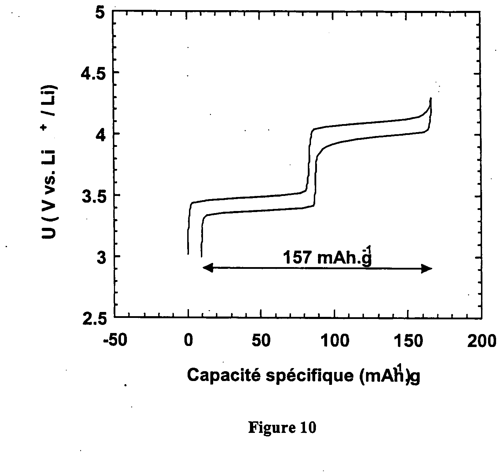

**Figure 10 :** Profils de charge et de décharge réalisés en mode galvanostatique à température ambiante a une vitesses de charge et décharge de C/24 pour des batteries contenant LiFe$_{0.5}$Mn$_{0.5}$PO$_4$ carboné.

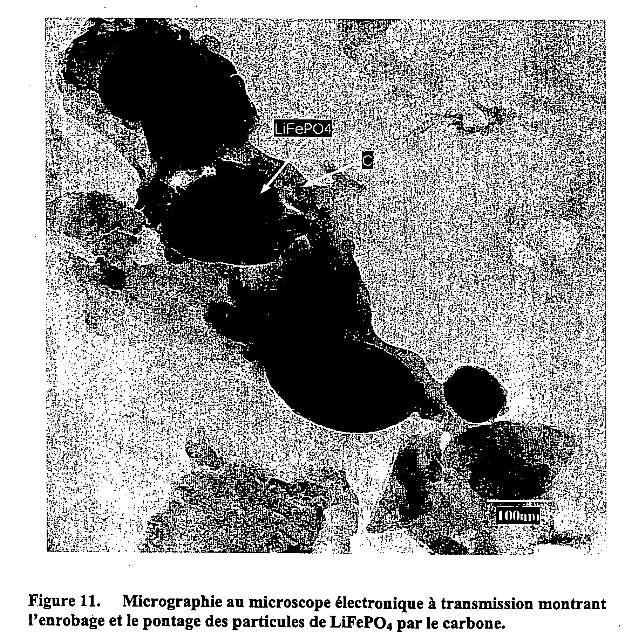

**Figure 11** : Micrographie au microscope électronique à transmission montrant l'enrobage et le pontage des particules de LiFePO$_4$ par le carbone.

## DESCRIPTION DE L'INVENTION

Un premier objet de la présente invention est constitué par la synthèse de composés de formule Li$_x$M$_{1-y}$M'$_y$(XO$_4$)$_n$, dans laquelle x, y et n sont des nombres tels que $0 \leq x \leq 2$, $0 \leq y \leq 0,6$ et $1 \leq n \leq 1,5$, M est un métal de transition ou un mélange de métaux de transition de la première ligne du tableau périodique, M' est un élément de valence fixe choisi parmi Mg$^{2+}$, Ca$^{2+}$, Al$^{3+}$, Zn$^{2+}$ ou une combinaison de ces mêmes éléments et X est choisi parmi S, P et Si,

par mise en équilibre dans les proportions requises d'un mélange comprenant au moins:

- a) une source de M, une partie au moins du ou desdits métaux de transition qui composent M se trouvant dans un état d'oxydation supérieur à celui du métal dans le composé final Li$_x$M$_{1-y}$M'$_y$(XO$_4$)$_n$;

- b) une source d'un élément M';

- c) un composé source de lithium; et

- d) éventuellement un composé source de X,

les sources des éléments M, M', Li et X pouvant ou non être introduites, en tout ou en partie, sous forme de composés comportant plus d'un élément source, et
la synthèse se faisant par réaction et mise en équilibre du mélange (de préférence intime et/ou homogène) dans les proportions requises des précurseurs a) à d), et par réduction de manière à amener le ou les métaux de transition au degré de valence voulu.

La réduction peut être réalisée de différentes façons, par les techniques utilisées dans l'élaboration de céramiques et par différents agents réducteurs; basés sur la chimie des dérivés du carbone, dont CO, des hydrocarbures et divers composés organiques, de l'hydrogène et de l'ammoniac.

Selon un mode préférentiel de réalisation de la présente invention, la réduction du mélange des précurseurs a) à d) est réalisée avec une atmosphère gazeuse réductrice.

La source de M peut également être une source de X et/ou la source de M' peut également être source de X et/ou la source de lithium peut également être source de X et/ou la source de X peut également être source de lithium.

Selon un mode préférentiel de réalisation de l'invention la mise en équilibre du mélange de précurseurs a) à d) est faite sous forme de mélange intime et/ou homogène. Par mélange intime, ont entend préférentiellement, dans le cadre de la présente invention, un mélange ne contenant pas d'agrégats de particules de composants individuels du mélange, et des tailles de particules de préférence inférieures à 10 microns, de préférence inférieure à 5 microns. Les méthodes permettant cette réalisation sont connues de l'homme de l'art, tels le cobroyage en présence de billes de matériau dur (tel l'acier, le carbure de tungstène, l'alumine, la zircone), à sec ou en présence d'un liquide, soit avec les appareilss de type cyclone où les particules sont affinées par frottement sur les parois de l'appareil ou sur elle-même, l'energie ultrasonore, soit encore l'atomisation (spray drying) de solutions ou de supensions.

Par mélange homogène ont entend un mélange dans lequel aucune variation locale de concentration d'un des composants du mélange n'est apparente d'où soit extraite la fraction du mélange choisi pour l'échantillonnage . L'agitation mécanique par le biais de palettes ou de barreaux magnétiques pour les suspension, les mélangeurs planétaires, à mouvement cycloïdal sont des exemples de mode de mise en œuvre ; par définition les solutions répondent à ce critère,

Dans le cadre de la présente invention, le ou les métaux de transition est (sont) avantageusement choisi(s) au moins en partie dans le groupe constitué par le fer, le manganèse, le cobalt et le nickel, le complément des métaux de transition étant préférentiellement choisi dans le groupe constitué par le vanadium, le titane, le chrome et le cuivre.

De façon avantageuse, le composé source de M est dans un état d'oxydation peut varier de 3 à 7.

Selon un mode préférentiel de réalisation de l'invention, le composé source de M est l'oxyde de fer III ou la magnétite, le dioxide de manganèse, le pentoxyde de di-vanadium, le phosphate de fer trivalent, le nitrate de fer trivalent, le sulfate de fer trivalent, l'hydroxyphosphate de fer et de lithium ou le sulfate ou le nitrate de fer trivalent, ou un mélange de ces derniers.

Selon un autre mode préférentiel de réalisation du procédé, le composé source de lithium est choisi dans le groupe constitué par l'oxyde ou l'hydroxyde de lithium, le carbonate de lithium, le phosphate neutre $Li_3PO_4$. le phosphate acide $LiH_2PO_4$, l'ortho, le méta ou les poly silicates de lithium, le sulfate de lithium, l'oxalate de lithium et l'acétate de lithium, ou un mélange de ces derniers, plus préférentiellement encore, le composé source de lithium est le carbonate de lithium de formule $Li_2CO_3$.

Selon un autre mode avantageux, la source de X est choisie dans le groupe constitué par l'acide sulfurique, le sulfate de lithium, l'acide phosphorique et ses esters, le phosphate neutre $Li_3PO_4$ ou le phosphate acide $LiH_2PO_4$, les phosphates mono- ou di-ammoniques, le phosphate de fer trivalent, le phosphate de manganèse et d'ammonium($NH_4MnPO_4$), la silice, les silicates de lithium, les alcoxysilanes et leurs produits d'hydrolyse partielle et les mélanges de ces derniers. Plus avantageusement encore, le composé précurseur de X est le phosphate de fer, de préférence le phosphate de fer (III), anhydre ou hydraté.

Le procédé de l'invention est particulièrement performant pour la préparation d'un ou de plusieurs des composés suivants, dans lequel au moins un des dérivés du lithium obtenu est de formule $LiFePO_4$, $LiFe_{1-s}Mn_sPO_4$ avec $0 \leq s \leq 0,9$, $LiFe_{1-y}Mg_yPO_4$ et $LiFe_{1-y}Ca_yPO_4$ avec $0 \leq y \leq 0,3$, $LiFe_{l-s-y}Mn_sMg_yPO_4$ avec $0 \leq s \leq 1$ et $0 \leq y \leq 0,2$, $Li_{1+x}FeP_{1-x}Si_xO_4$ avec $0 \leq x \leq 0,9$, $Li_{1+x}Fe_{1-s}Mn_sP_{1-x}Si_xO$ avec $0 \leq s \leq 1$, $Li_{1+z}Fe_{1-s-z}Mn_sP_{1-z}S_zO_4$ avec $0 \leq s \leq 1$, $0 \leq z \leq 0,2$, $Li_{1+2q}Fe_{1-s-q}Mn_sPO_4$ avec $0 \leq s \leq 1$, et $0 \leq q \leq 0,3$, $Li_{1+r}Fe_{1-s}Mn_s(S_{1-r}P_rO_4)_{1,5}$ avec $0 \leq r \leq 1$, $0 \leq s,t \leq 1$ ou $Li_{0,5+u}Fe_{1-t}Ti_t(PO_4)_{1,5}$ avec $0 \leq t \leq 1$, $0 \leq u \leq 2,5$. Le procédé selon l'invention donne des résultats améliorés lorsqu'on obtient des composés de formule $Li_xM_{1-y}M'_y(XO_4)_n$ ayant une structure olivine ou Nasicon, incluant la forme monoclinique.

La réduction est obtenue par l'action d'une atmosphère réductrice choisie de façon à réduire l'état d'oxydation de l'ion métallique M au niveau requis pour la constitution du composé sans toutefois le réduire à l'état métallique neutre. Cette atmosphère réductrice contient préférentiellement de l'hydrogène ou un gaz capable de générer de l'hydrogène dans les conditions de la synthèse, de l'ammoniac ou une substance capable de générer de l'ammoniac dans les conditions de la synthèse ou du monoxyde de carbone, ces gaz étant utilisés purs ou en mélanges et pouvant également être utilisés en présence de vapeur d'eau et/ou en présence de dioxyde de carbone et/ou en présence d'un gaz neutre (tel que l'azote ou l'argon).

Selon un mode avantageux de réalisation, l'atmosphère réductrice est constituée par un mélange $CO/CO_2$ ou $H_2/H_2O$, $NH_3/H_2O$ ou leur mélange, générant une pression d'équilibre d'oxygène inférieure ou égale à celle déterminée par le métal de transition au degré d'oxydation correspondant aux précurseurs induits pour former le composé $Li_xM_{1-y}M'_y(XO_4)_n$, mais supérieure à celle correspondant à la réduction d'un quelconque des éléments de transition présents à l'état métallique, assurant la stabilité thermodynamique de $Li_xM_{1-y}M'_y(XO_4)_n$ dans le mélange réactionnel, indépendamment du temps de réaction de la synthèse.

Selon un autre mode avantageux de réalisation de l'invention l'atmosphère réductrice est constituée par un mélange $CO/CO_2$, $H_2/H_2O$, $NH_3/H_2O$ ou leur mélange, générant une pression d'équilibre d'oxygène inférieure ou égale à celle déterminée par un des métaux de transition présents dans $Li_xM_{1-y}M'_y(XO_4)_n$, pouvant éventuellement conduire à la réduction d'au moins cet élément de transition à l'état métallique, l'obtention du composé $Li_xM_{1-y}M'_y(XO_4)_n$ étant réalisée par le contrôle de la température et du temps de contact avec la phase gazeuse ; la température de synthèse étant préférentiellement comprise entre 200 et 1.200 °C, plus préférentiellement encore entre 500 et 800 ° C, et le temps de contact du mélange réactionnel avec la phase gazeuse étant préférentiellement compris entre 2 minutes et 5 heures et plus préférentiellement encore entre 10 et 60 minutes. Ce contrôle est plus facilement réalisé lors d'une réduction par une phase gazeuse du fait de la diffusion rapide des molécules de gaz autours des grains. De plus, la nucléation de la phase métallique est lente, et peut donc être plus facilement évitée du fait de la réduction rapide par la phase gazeuse.

L'atmosphère gazeuse réductrice est préférentiellement obtenue par décomposition sous vide ou sous atmosphère inerte, d'un composé organique ou d'un mélange de composé organiques contenant, liés chimiquement, au moins de l'hydrogène et de l'oxygène, et dont la pyrolyse génère du monoxyde de carbone et / ou un mélange de dioxyde et de monoxyde de carbone, de l'hydrogène et / ou un mélange hydrogène et vapeur d'eau susceptibles d'effectuer la réduction amenant à la formation du composé $Li_xM_{1-y}M'_y(XO_4)_n$.

L'atmosphère gazeuse réductrice est préférentiellement obtenue par oxydation partielle par l'oxygène ou par l'air, d'un hydrocarbure et/ou de carbone appelés carbone sacrificiel.

Par carbone sacrificiel, on entend préférentiellement un carbone destiné à effectuer une réaction chimique, en particulier avec la phase gazeuse qui sert en fait de vecteur pour la réduction des précurseurs du matériau, ce carbone étant donc destiné à être consommé.

Dans le cadre de la présente invention, la teneur en vapeur d'eau est préférentiellement correspond, bornes comprises, entre 0,1 et 10 molécules d'$H_2O$ par atome de carbone de l'hydrocarbure) à un température élevée (préférentiellement comprise entre 400 et 1.200 °C) permettant la formation de monoxyde de carbone ou d'hydrogène ou d'un mélange de monoxyde de carbone et d'hydrogène.

Selon un mode avantageux, le carbone sacrificiel est choisi dans le groupe constitué par le graphite naturel ou artificiel, le noir de carbone ou le noir d'acétylène et les cokes (préférentiellement de pétrole), le carbone sacrificiel étant préférentiellement sous forme de particules d'une taille de préférence inférieure à 15 micromètres, plus préférentiellement encore inférieure à 2 micromètres.

La quantité de carbone sacrificiel est de préférence inférieure ou sensiblement égale à la quantité requise pour réduire le mélange réactionnel sans laisser de carbone sacrificiel résiduel, cette quantité est de préférence d'un atome de carbone pour se combiner à un atome d'oxygène à des températures supérieures à 750 ° C et elle est de préférence de un atome pour se combiner à 2 atomes d'oxygène pour des températures inférieures à 750 ° C.

Selon un autre mode avantageux de réalisation, la synthèse est réalisée avec une quantité de carbone sacrifitiel est qui est (sensiblement) égale, mole pour mole à la moité de la quantité d'oxygène nécessaire à enlever du mélange de composés précurseur pour obtenir le matériau $Li_xM_{1-y}M'_y(XO_4)_n$ par réduction, lorsque la réaction est réalisée au dessous de 710°C et égale, mole pour mole à cette quantité, lorsque la réaction est réalisée en dessous de cette température.

Un autre exemple est constitué par un procédé de synthèse d'un matériau comportant un noyau et un enrobage et/ou étant connectées entre elles par un pontage, le dit noyau comprenant au moins un composé de formule $Li_xM_{1-y}M'_y(XO_4)_n$, dans laquelle x, y et n sont des nombres tels que $0 \le x \le 2,0 \le< y \le 06$ et $1 \le n \le 1,5$, M est un métal de transition ou un mélange de métaux de transition de la première ligne du tableau périodique, M' est un élément de valence fixe choisi parmi $Mg^{2+}$, $Ca^{2+}$, $Al^{3+}$, $Zn^{2+}$ et X est choisi parmi S, P et Si, et

ledit enrobage étant constitué d'une couche de carbone,

ledit pontage étant constitué par du carbone (reliant au moins deux particules entre elles),

le dit procédé comportant la mise en équilibre (de préférence intime et/ou homogène) dans les proportions requises d'un mélange comprenant au moins :

a) une source de M, une partie au moins du ou desdits métaux de transition qui composent M se trouvant dans un état d'oxydation supérieur à celui du métal dans le composé final $Li_xM_{1-y}M'_y(XO_4)_n$;

- b) une source d'un élément M';

- c) un composé source de lithium; et

- d) éventuellement un composé source de X;

les sources des éléments M, M', Li et X pouvant ou non être introduites, en tout ou en partie, sous forme de composés comportant plus d'un élément source, et

la synthèse se faisant par réaction et mise en équilibre du mélange dans les proportions requises des précurseurs a) à d), avec une atmosphère gazeuse réductrice, de manière à amener le ou les métaux de transition au degré de valence voulu,

la synthèse se faisant en présence d'une source de carbone appelée carbone conducteur,

la synthèse conduisant alors, par une étape de pyrolyse du composé source de carbone, conduite après ou, de préférence, simultanément aux étapes de préparation du mélange préférentiellement intime et/ou homogène) des précurseurs et de réduction du mélange obtenu, audit matériau.

Le carbone présent dans le matériau, sous forme d'enrobage et de pontage, est intimement adhérent du matériau et confère à ce dernier une conductivité électronique supérieure à celle du matériau constitué des particules correspondantes non enrobées.

Selon un mode, l'ajout de carbone conducteur est effectué postérieurement à la synthèse de $Li_xM_{1-y}M'_y(XO_4)_n$.

Selon un autre mode, l'ajout de carbone conducteur est réalisé simultanément à la synthèse de

$Li_xM_{1-y}M'_y(XO_4)_n$.

Les paramètres réactionnels sont choisis, en particulier la cinétique de la réduction par la phase gazeuse, de façon à ce que le carbone conducteur ne participe pas d'une manière significative au processus de réduction.

Selon une autre variante intéressante, les paramètres réactionnels de la synthèse, tels flux et composition de la phase gazeuse, température et temps de contact sont choisis de façon à ce que le carbone conducteur ne participe pas d'une manière significative au processus de réduction, c'est à dire que le processus réduction est le fait de la phase gazeuse, et en particulier de manière à ce que la température réactionaelle soit de préférence inférieure à 900°C, et le temps de réaction inférieure à 5 heures, d'une manière encore plus priviligiée de manière à ce que la température réactionnelle soit en dessous de 800°C et/ou pour des temps inférieurs à 1heure.

Selon une autre varainte de la synthèse, la valeur de x dans $Li_xM_{1-y}M'_y(XO_4)_n$ est choisie de manière à assurer un contrôle thermodynamique et/ou une cinétique rapide de la réduction, en permettant de sélectionner des atmosphères réductrices gazeuses facilement accessibles par simple mélange de gaz ou par reformage de molécule organiques simples.

La substance organique source de carbone conducteur est sélectionnée de façon à ce que les particules du matériau obtenu après l'étape de pyrolyse possède sensiblement la forme et la distribution granulométrique des précurseurs de la réaction de synthèse.

Ainsi, la substance organique source de carbone conducteur est sélectionnée dans le groupe constitué par les polymères et oligomères contenant un squelette carboné, les hydrates de carbone simples ou polymères et les hydrocarbures aromatiques.

La substance organique source de carbone conducteur est choisie de façon à laisser un dépôt de carbone conducteur en surface (enrobage) des particules solides constitutives du matériau et/ou, entre ces particules solides constitutives des ponts de carbone (pontage), lors de la pyrolyse.

Selon une autre variante, la source de carbone conducteur contient, dans un même composé ou dans le mélange qui constitue cette source, de l'oxygène et de l'hydrogène liés chimiquement et dont la pyrolyse libère localement de l'oxyde de carbone et / ou du dioxyde de carbone et/ou de l'hydrogène et de la vapeur d'eau contribuant, outre le dépôt de carbone, à créer localement l'atmosphère réductrice requise pour la synthèse du matériau $Li_xM_{1-y}M'_y(XO_4)_n$.

Ainsi, la substance organique source de carbone conducteur est au moins un des composés du groupe constitué par le polyéthylène, le polypropylène, le glucose, le fructose, le sucrose, le xylose, le sorbose, l'amidon, la cellulose et ses esters, les polymères blocs d'éthylène et d'oxyde d'éthylène et les polymères de l'alcohol furfurylique.

La source de carbone conducteur est préférentiellement ajoutée au début ou au cours de l'étape de mélange des précurseurs de la réaction a) à d).

Selon un mode, la teneur en substance source de carbone conducteur, présent dans le milieu réactionnel soumis à réduction, est choisie de façon à ce que la teneur en carbone conducteur dans le milieu réactionnel soit préférentiellement, bornes comprises, entre 0,1 et 25 %, plus préférentiellement encore pour qu'elle soit, bornes comprises, entre 0,3 et 1,5 % de la masse totale du mélange réactionnel.

Avantageusement, dans le procédé selon l'objet de l'invention, le traitement thermique (qui inclue la réaction de formation de $Li_xM_{1-y}M'_y(XO_4)_n$ et la réduction et la pyrolyse) est réalisé par chauffage depuis la température ordinaire jusqu'à une température comprise entre 500 et 1.100 °C, en présence d'une atmosphère réductrice telle que précédemment définie. Cette température maximale atteinte est encore plus avantageusement comprise entre 500 et 800 °C.

Selon un autre mode de réalisation avantageux, la température et la durée de la synthèse sont choisis en fonction de la nature du métal de transition, c'est-à-dire au-dessus d'une température minimum à laquelle l'atmosphère réactive est capable de réduire le ou les éléments de transition à leur état d'oxydation requis dans le composé $Li_xM_{1-y}M'_y(XO_4)_n$ et en dessous d'une température ou d'un temps amenant une réduction du ou des éléments de transition à l'état métallique ou une oxydation du carbone résultant de la pyrolyse de la substance organique.

Selon un autre mode, le cœur du noyau des particules du noyau synthétisé est pour au moins 95 %, un composé $Li_xM_{1-y}M'_y(XO_4)_n$ (préférentiellement le composé synthétisé est de formule $LiMPO_4$), le complément pouvant être un oxyde d'un ou des métaux des précurseurs, fonctionnant comme composé d'insertion ou inerte, du carbone, du carbonate ou ou phosphate de lithium et le taux de carbone conducteur après pyrolyse est compris entre 0,1 et 10 % en masse par rapport à la masse du composé $LiMPO_4$.

Le composé source de carbone conducteur est choisi de façon à être facilement dispersable lors du mélange avec les précurseurs. Le mélange intime et ou homogène des précurseurs a) à d) est avantageusement réalisé par agitation et/ou par broyage mécanique et/ou par homogénéisation ultrasonore, en présence ou non d'un liquide, ou par spay-drying d'une solution d'un ou de plusieurs précurseurs et/ou d'une suspension et/ou d'une émulsion.

Selon un mode particulièrement avantageux de réalisation, les procédés de synthèse de la présente invention, comportent les deux étapes :

- i) de broyage intime sec ou dans un solvant des composés sources, y compris du carbone, et séchage, le cas échéant; et

- ii) de traitement thermique sous balayage d'une atmosphère réductrice contrôlée.

Les procédés selon l'invention permettent de réaliser la synthèse de matériaux possédant une conductivité, mesurée sur un échantillon de poudre compactée à une pression supérieure ou égale à 3000, de préférence de 3750 Kg.cm$^{-2}$, qui est supérieure à 10$^{-8}$ Scm$^{-1}$.

La mesure de la conductivité est effectuée sur des poudres de l'échantillon. Cette poudre (de 100 mg à 1g environ) est mise dans un moule cylindrique creux de 1,3 cm de diamètre, réalisé en poly(oxyméthylène) (Delrin®) et elle est compactée entre deux pistons d'acier inoxydable à l'aide d'une presse de laboratoire à une force de 5.10$^3$ Kg ce qui correspond à une pression de 3750 Kg.cm$^{-2}$.

La mesure de conductivité est effectuée en utilisant les pistons (plungers) comme électrodes et par la méthode de l'impédance complexe connue de la personne de la technique considérée. La conductivité est obtenue à partir de la résistance par la formule $\rho = RS/l$ où R est la résistance mesurée, et S la surface (1,33 cm$^2$ pour 1,3 cm de diamètre),

$l$ l'épaisseur de l'échantillon et la résistivité est déterminée par la formule $\rho = RS/l$.

Un des composés avantageusement préparés par le procédé selon l'objet de la présente invention est le composé de formule LiFePO$_4$.

Un des matériaux obtenu est constitué par des particules comportant un noyau, un enrobage et ou un pontage. Le noyau des particules est essentiellement (de préférence pour au moins 95 %) constitué d'un composé de formule LiFePO$_4$, le complément étant constitué par d'autre composés, notamment d'autres oxydes ayant ou non une activité, ou du phosphate de lithium ou du phosphate ferrique et dans lequel, l'enrobage et/ou le pontage des particules du matériau par le carbone représente préférentiellement une teneur en carbone conducteur comprise entre 0,2 et 5 %, préférentiellement comprise entre 0,3 et 3 % par rapport à la masse totale du matériau obtenu.

Le composé source de fer, en particulier le composé source de fer dans la synthèse du composé de formule LiFePO$_4$, est choisi au moins partiellement dans le groupe constitué par les phosphates de fer, les oxy- ou hydroxyphosphates de fer, les oxydes de fer les oxy- ou hydroxyphosphates de fer et les oxydes de fer et de lithium, dans lesquels au moins une partie du fer est à l'état d'oxydation III, ainsi que les mélanges de ces derniers.

Le composé source de lithium est avantageusement, le phosphate de lithium, le dihydrogénophosphate de lithium, le carbonate de lithium, l'acétate de lithium, ou l'hydroxyde de lithium, ainsi que les mélanges de ces derniers.

Le composé source de phosphore est avantageusement un phosphate d'ammonium, de l'acide ortho-, méta- ou pyro-phosphorique, ou du pentoxyde de phosphore.

Le procédé de synthèse selon l'invention peut être réalisée dans le réacteur servant ou ayant servi pour la préparation du mélange des précurseurs ou dans un réacteur différent (de préférence dans un reformer).

Un objet de la présente invention est constitué par des particules d'un composé de formule Li$_x$M$_{1-y}$M'$_y$(XO$_4$)$_n$, dans laquelle x, y et n sont des nombres tels que 0 ≤ x ≤2, 0≤y ≤0,6, et 1 ≤n≤1,5, M est un métal de transition ou un mélange de métaux de transition de la première ligne du tableau périodique, M' est un élément de valence fixe choisi parmi Mg$^{2+}$, Ca$^{2+}$, Al$^{3+}$, Zn$^{2+}$ et X est choisi parmi S, P et Si, ledit composé ayant une conductivité, mesurée sur un échantillon de poudre compactée à une pression de 7350 Kg.cm$^{-2}$, qui est supérieure à 10$^{-8}$ S.cm$^{-1}$, les particules ayant une taille comprise entre 0,05 micromètres et 15 micromètre, de préférence entre 0,1 et 10 micromètres.

Un autre exemple est constitué par un matériau susceptible d'être obtenu par un procédé, comportant un noyau et un enrobage et/ou un pontage, ledit matériau présentant une teneur totale en carbone supérieure à 0,1 %, de préférence comprise entre 0,1 et 0,2 % de la masse totale du matériau.

Selon un mode de réalisation de cet exemple, le dit noyau comprenant au moins un composé de formule Li$_x$M$_{1-y}$M'$_y$(XO$_4$)$_n$, dans laquelle x, y et n sont des nombres tels que 0≤x ≤2, 0<y ≤0,6, et 1<n≤1,5, M est un métal de transition ou un mélange de métaux de transition de la première ligne du tableau périodique, M' est un élément de valence fixe choisi parmi Mg$^{2+}$, Ca$^{2+}$, Al$^{3+}$, Zn$^{2+}$ et X est choisi parmi S, P et Si, ledit matériau ayant une conductivité mesurée sur un échantillon de poudre compactée à une pression de 3750 Kg.cm$^{-2}$ qui est supérieure à 10$^{-8}$ Scm$^{-1}$.

Un autre exemple est constitué par un matériau comportant un noyau et un enrobage et ou un pontage, le dit noyau comprenant au moins un composé de formule Li$_x$M$_{1-y}$M'$_y$(XO$_4$)$_n$, dans laquelle x, y et n sont des nombres tels que 0 ≤x ≤2, 0≤y ≤0,6, et 1 ≤n ≤1,5, M est un métal de transition ou un mélange de métaux de transition de la première ligne du tableau périodique, M' est un élément de valence fixe choisi parmi Mg$^{2+}$, Ca$^{2+}$, Al$^{3+}$, Zn$^{2+}$ et X est choisi parmi S, P et Si, ledit matériaux ayant une conductivité, mesurée sur un échantillon de poudre compactée à une pression comprise entre de 3750, qui est supérieure à 10$^{-8}$ S.cm$^{-1}$. Les matériaux ainsi obtenus possède, selon la méthode de mesure ci-après explicitée, une bonne conductivité qui dans certains cas est supérieure à 10$^{-8}$ Scm$^{-1}$ sur un échantillon de poudre compactée et une de carbone supérieure à 0,1 %, de préférence comprise entre 0,1 et 0,2 % de la masse totale du matériau.

Les utilisations de ces matériaux sont très importantes dans le domaine de l'électrochimie, comme matériau d'électrode, utilisés seuls ou en mélange avec d'autres matériaux électroactifs, en particulier dans les cellules servant de générateur primaire ou secondaire, associes éventuellement en pile ou accumulateurs ; dans les super capacités, systèmes capables de stocker de l'énergie électrique avec des puissances importantes ($\geq$ 800 W1$^{-1}$), dans les systèmes de modulation de la lumière comme les électrochromes et les miroirs anti-éblouissement pour les automobiles. Dans les systèmes de séparation ou de purification des métaux, en particulier du lithium, depurification de l'eau, dans les réactions d'oxydation ou de réduction en synthèse organiques; dans le cas de réaction d'oxydation, il peut être nécessaire de delithier, chimiquement ou électrochimiquement le matériau pour augmenter son pouvoir oxydant

Un objet de la présente invention est constitué par les cellules électrochimiques comprenant au moins deux électrodes et au moins un électrolyte, ces cellules étant caractérisées en ce qu'au moins une de leurs électrodes comprend au moins un composé selon le troisième objet de l'invention.

Un objet de la présente invention est constitué par des cellules électrochimiques comprenant au moins deux électrodes et au moins un électrolyte, ces cellules étant caractérisées en ce qu'au moins une de leurs électrodes comprend au moins un matériau selon le objet de l'invention.

Ces cellules sont préférentiellement conçues de façon que l'électrolyte est un polymère, solvatant ou non, optionnellement plastifié ou gélifié par un liquide polaire contenant en solution un ou plusieurs sels métalliques, à titre d'exemple .

De façon avantageuse, l'électrolyte est un liquide polaire immobilisé dans un séparateur microporeux et contenant en solution un ou plusieurs sels métalliques, à titre d'exemple au moins un des sels métalliques est un sel de lithium.

Préférentiellement, au moins une des électrodes négatives est constituée par du lithium métallique, un alliage de lithium, notamment avec l'aluminium, l'antimoine, le zinc, l'étain, éventuellement en mélange nanomoléculaire avec de l'oxyde de lithium, ou un composé d'insertion du carbone, notamment du graphite, un nitrure double de lithium et de fer, de cobalt ou de manganèse, un titanate de lithium de formule $Li_xTi_{(5+3y)/4}O_4$, avec $1\leq x \leq(11-3y)/4$ (ou) avec $0\leq y \leq 1$.

Selon un autre mode de réalisation des cellules selon l'invention, au moins une des électrodes positives contient un des produits susceptibles d'être obtenu par un procédé selon l'invention, utilisé seul ou en mélange avec un oxyde double de cobalt et le lithium, ou un avec un oxyde complexe de formule $Li_xNi_{1-y-z-q-r}Co_yMg_zAl_rO_2$ avec $0,1\leq x \leq 1$, $0\leq y$, z et $r \leq 0,3$ ou avec un oxyde complexe de formule $Li_xMn_{1-y-z-q-r}Co_yMg_zAlrO_2-qF_q$ avec $0,05\leq x \leq 1$ et $0\leq y$, z, r, $q \leq 0,3$.

Le polymère utilisé pour lier les électrodes ou comme électrolytes est un avantageusement un polyéther, un polyester, un polymère basé sur les unités méthacrylate de méthyle, un polymère à base d'acrylonitrile, et/ou de fluorure de vinylidène,, ou un mélange de ces derniers.

De façon préférentielle, la cellule comporte un solvant qui est de préférence un solvant non protogénique qui comprend du carbonate d'éthylène ou de propylène, un carbonate d'un alkyle ayant de 1 à 4 atomes de carbone, de la $\gamma$-butyrolactone, une tétraalkylsufamide, un $\alpha$-$\omega$ dialkyléther d'un mono-, di-, tri-, tetra- or oligo-éthylene glycol de poids moléculaire inférieur ou égal à 5000, ainsi que les mélange des solvants susnommés.

Les cellules selon l'invention fonctionnent préférentiellement comme générateur primaire ou secondaire, comme super-capacité ou comme système de modulation de la lumière.

Selon un autre mode préférentiel, les cellules électrochimiques selon la présente invention fonctionnent comme super capacité, caractérisé en ce que le matériau de l'électrode positive est un matériau selon le troisième, quatrième ou le cinquième objet de la présente invention, et l'électrode négative un carbone de surface spécifique supérieure à 50 m$^2$.g$^{-1}$ sous forme de poudre, de fibre ou de composite mésoporeux de type composite carbone-carbone.

Selon un autre mode de réalisation, les cellules électrochimiques fonctionnent comme système de modulation de la lumière et en ce que la contre-électrode optiquement inactive est un matériau selon le objet de la présente invention épandu en couche mince sur un support transparent conducteur, de type verre ou polymère recouvert d'un oxyde d'étain dopé ($SnO_2$:Sb ou $SnO_2$:F) ou d'un oxyde d'indium dopé ($In_2O_3$:Sn).

**Modes préférentiels**

L'invention proposée porte sur une nouvelle voie de synthèse simplifiée des composés $Li_xMXO_4$ à structure olivine obtenus par réduction d'un mélange dans lequel au moins une partie du métal de transition M se trouve dans un état d'oxydation supérieur à celui du composé final $LiMPO_4$. Un autre avantage surprenant de la présente invention est d'être également compatible avec la synthèse décrite dans CA-A-2.270.771, qui conduit à des performances optimisées. Dans ce cas, le composé organique, source de carbone, est ajouté au mélange des réactifs de départ contenant au moins une partie du métal de transition dans un état d'oxydation supérieur à celui du composé lithium $LiMPO_4$ et la synthèse simplifiée conduit directement au matériau recouvert de carbone. La simplification porte notamment sur la réduction du nombre des étapes et surtout du nombre des étapes où il faut contrôler l'atmosphère. On peut se référer pour cela à l'ouvrage "Modem Batteries", de C.A. Vincent,& B. Scrosati, Arnold publishers, London, Sydney, Auckland, (1997).

Les améliorations portent également sur la reproductibilité de la synthèse, sur le contrôle de la taille et de la distribution des particules, ainsi que sur la réduction du nombre et du coût des réactifs de départ et bien entendu du matériau final. Cette synthèse, lorsque combinée à l'enseignement de CA-A-2.270.771, permet également de contrôler la teneur en carbone du matériau final.

Nous rapportons ici, pour la première fois la synthèse d'un composé $Li_xMXO_4$ de type olivine, en l'occurrence $LiFePO_4$, réalisée par réduction d'un sel de fer III. Les sels de départ n'étant plus sensibles à l'oxydation, le processus de synthèse s'en trouve très simplifié. De plus l'utilisation possible de $Fe_2O_3$ comme source de fer réduit considérablement le coût de synthèse de $LiFePO_4$. Ce matériau aurait alors la préférence face à d'autres matériaux de cathode pour batterie au lithium, tels que les oxydes de cobalt ou de nickel dans le cas des accumulateurs de type lithium-ion, ou les oxydes de vanadium $V_2O_5$ ou analogues moins inoffensifs pour l'environnement.

$LiFePO_4$ peut être préparé à partir d'un sel de fer III, stable à l'air, par exemple $FePO_4.2H_2O$ ou $Fe_2O_3$ ou de toute autre source de fer III. La source de lithium étant par exemple $Li_2CO_3$ dans le premier cas, ou LiOH. $LiH_2PO_4$ ou $Li_3PO_4$ étant utilisé comme source conjointe de lithium et de phosphore dans le second cas. Les mélanges stœchiométriques ainsi que le précurseur de carbone sont traités à 700°C pendant 4 heures sous balayage d'un excès d'atmosphère réductrice de façon à réduire l'état d'oxydation du fer. Le choix de l'atmosphère et de la température de synthèse sont très importants afin de pouvoir réduire le fer III en fer II sans que l'atmosphère gazeuse ou le carbone présent ne puissent réduire le fer à l'état métallique. Cette dernière sera préférentiellement, mais de façon non-limitative, constituée par exemple d'hydrogène, d'ammoniac, d'un mélange gazeux capable de fournir de l'hydrogène dans les conditions de la synthèse, l'hydrogène pouvant être utilisé pur ou dilué dans un gaz inerte sec ou hydraté, d'oxyde de carbone, éventuellement mélangé avec de dioxyde de carbone et/d'un gaz neutre sec ou hydraté. La température maximale du traitement thermique est choisie de telle sorte que le carbone présent soit thermodynamiquement stable vis-à-vis du fer II et de préférence vis-à-vis de la phase gazeuse. Dans le cas du fer, la zone de température limite se situe entre 500 et 800°C, de préférence vers 700°C. Au-delà de ces températures, le carbone devient suffisamment réducteur pour réduire le fer II en fer métallique. Dans le cas des autres métaux de transition, toute personne du métier pourra utiliser les courbes d'Ellingham pour adapter la température et la nature de l'atmosphère gazeuse de façon à obtenir un résultat équivalent.

Un aspect inattendu et surprenant est la relative inertie chimique du carbone déposé à la surface du matériau par rapport aux réactions permettant de réduire le degré d'oxydation du métal de transition, en particulier, du fer. Du point de vue thermodynamique, le carbone formé par décomposition de la substance organique pyrolysée a un pouvoir suffisamment réducteur pour s'oxyder en $CO_2$ ou CO et réduire, même sous atmosphère inerte, le Fer III en Fer II, ce qui aurait rendu le contrôle de la teneur du produit final en carbone difficile. Les inventeurs ont remarqué que la réaction de réduction était en quasi-totalité due à l'action de l'atmosphère gazeuse réductrice, dont la cinétique est plus rapide que celle due à l'action du carbone déposé en surface, malgré le contact intime entre les deux phases solides (carbone et matériau rédox). En employant une atmosphère réductrice, préférentiellement à base d'hydrogène, d'ammoniac ou d'oxyde de carbone, la réduction du fer par le carbone solide n'est pas favorisée cinétiquement, et le Fer III est réduit en Fer II principalement par réaction avec l'atmosphère réductrice. La teneur en carbone dans le produit final correspond donc pratiquement au rendement de décomposition de la substance organique, ce qui permet de contrôler ladite teneur.

Les exemples suivants sont donnés afin de mieux illustrer la présente invention, mais ils ne sauraient être interpréter comme constituant une limitation de la portée de la présente invention.

## <u>EXEMPLES</u>

### Exemple 1 - Synthèse de $LiFePO_4$ à partir du phosphate de fer sous atmosphère réductrice.

$LiFePO_4$ a été préparé par réaction de $FePO_4.2H_2O$ et $Li_2CO_3$ en présence d'hydrogène. Dans une première étape, les quantités stœchiométriques des deux composés sont broyées ensemble dans l'isopropanol, puis chauffées progressivement (6 C par minute jusqu'à 700°C) dans un four tubulaire sous balayage de gaz réducteur (8% d'hydrogène dans de l'argon). Cette température est maintenue pendant une heure. L'échantillon est refroidi en 40 minutes soit avec une vitesse de refroidissement d'environ 15 °C par minutes.

Durant tout le traitement thermique et également y compris lors de la descente en température, le flux de gaz réducteur est maintenu. La durée totale du traitement thermique est d'environ 3 heures et demie.

La structure de l'échantillon a été vérifiée par diffraction RX et les raies correspondent à celles de la triphylite $LiFePO_4$ pure.

### Exemple de référence 1' - Préparation de $LiFePO_4$ enrobé de carbone synthétisé à partir de l'échantillon préparé à l'exemple 1

La triphylite obtenue à l'exemple 1 est imprégnée d'une solution d'acétate de cellulose (teneur de 39,7 % en poids d'acetyl, poids moléculaire moyen $M_w$ de 50.000) dans l'acétone. La quantité d'acétate de cellulose ajoutée représente 5% du poids de triphylite traitée. L'utilisation d'un précurseur de carbone en solution permet une parfaite répartition sur les particules de triphylite. Après séchage, le mélange est placé dans le four décrit précédemment, sous balayage d'une atmosphère d'argon. La température est augmentée de 6°C par minute jusqu'à 700 °C. Cette dernière température est maintenue une heure. L'échantillon est alors refroidi progressivement, toujours sous balayage d'argon. Cet échantillon contient 1% en poids de carbone, ce qui correspond à un rendement de carbonisation de l'acétate de cellulose de 20%.

Le matériau présente une conductivité électronique de surface. Cette dernière a été mesurée sur une pastille de poudre compactée. Une force de 5 tonnes est appliquée lors de la mesure sur un échantillon de 1,3 cm de diamètre. Dans ces conditions, la conductivitée électronique mesurée est de $5.10^{-5}$ S.cm$^{-1}$.

**Exemple 1" - Comparaison du comportement électrochimique des matériaux préparés aux exemples 1 et 1' en cellules électrochimiques.**

Les matériaux préparés à l'exemple 1 et 1' ont été testés dans des piles boutons du type CR 2032 en batteries lithium polymère à 80°C. Les cathodes ont été préparées en mélangeant ensemble la poudre du matériau actif avec du noir de carbone (Ketjenblack®) pour assurer l'échange électronique avec le collecteur de courant et du poly(oxyde d'éthylène) de masse 400.000 utilisé comme agent liant d'une part et conducteur ionique d'autre part. Les proportions en poids sont 51:7:42. De l'acétonitrile est ajouté au mélange pour dissoudre le poly(oxyde d'éthylène) en quantité suffisante pour former une suspension homogène. Cette suspension obtenue est ensuite coulée sur un disque d'acier inoxydable de 1,cm$^2$. La cathode ainsi préparée est séchée sous vide, puis transférée en boîte à gants sous atmosphère d'hélium (< 1ppm H$_2$O, O$_2$). Une feuille de lithium (27 $\mu$m) laminée sur un substrat de nickel a été utilisée comme anode. L'électrolyte polymère était composé de poly(oxyde d'éthylène) de masse 5.000.000 et de sel de lithium de la bistrifluo-risulfoninimide Li[(CF$_3$SO$_2$)$_2$N]) (ci-après LiTFSI) dans les proportions oxygène des unités oxyéthylène / ions lithium de 20:1.

Les expériences électrochimiques ont été menées à 80°C, température à laquelle la conductivité ionique de l'électrolyte est suffisante ($2 \times 10^{-3}$ Scm$^{-1}$).

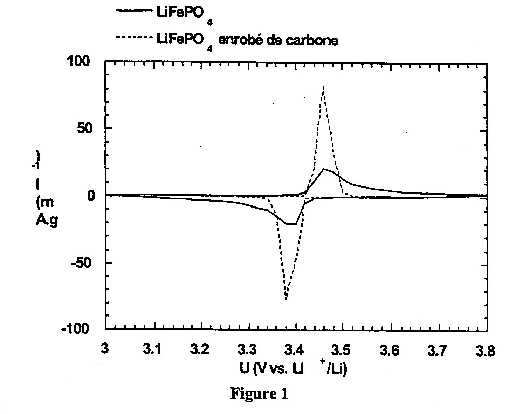

La Figure 1 montre le premier cycle obtenu par voltamétrie lente, une technique bien connue de l'homme de l'art (20 mV.h$^{-1}$) contrôlée par un cycleur de batterie de type Macpile® (Biologie™, Claix, France) des échantillons préparés à l'exemple 1 et 1'.

Le composé non carboné de l'exemple 1 présente les pics d'oxydo-réduction caractéristiques de LiFePO$_4$. La capacité échangée lors du processus de réduction représente 74 % de la valeur théorique. Les cinétiques de réaction sont lentes et la décharge s'étend jusqu'à 3 Volts. Ces limitations de capacités et de cinétiques de réactions sont couramment observées pour des échantillons de LiFePO$_4$ non carbonés. Le composé carboné de l'exemple 1' montre des pics d'oxydo-réduction bien définis et des cinétiques de réaction beaucoup plus rapides que ceux du matériau issu de la synthèse décrite dans l'exemple 1. La capacité atteinte en décharge est de 87 % de la valeur théorique ce qui représente une amélioration de la capacité du générateur électrochimique de 17% par rapport à celle de l'échantillon non carboné de l'exemple 1.

**Exemple 2: Synthèse de LiFePO$_4$ carboné à partir du phosphate de fer sous atmosphère réductrice.**

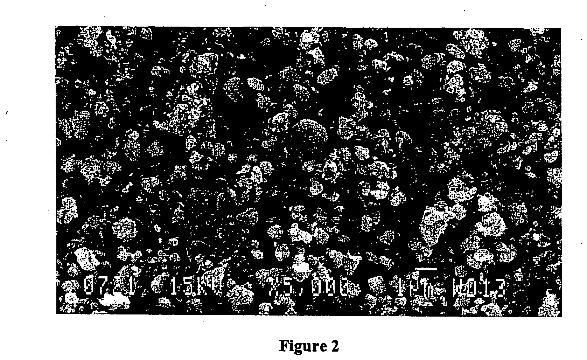

LiFePO$_4$ carboné a été préparé par réaction réductrice de FePO$_4$.2H$_2$O et Li$_2$CO$_3$ en présence d'hydrogène. Dans une première étape, les quantités stœchiométriques des deux composés ainsi que la source de carbone (acétate de cellulose, (teneur de 39,7 % en poids d'acetyle, poids moléculaire moyen M$_w$ de 50.000), en faible proportion (5% en poids par rapport au poids de FePO$_4$ 2H$_2$O, soit 4.2% par rapport au poids du mélange FePO$_4$.2H$_2$O et Li$_2$CO$_3$) sont broyées ensemble dans l'isopropanol. Le solvant est évaporé et le mélange soumis au traitement thermique décrit dans les exemples 1 et 1'. Durant tout le traitement thermique et également lors de la descente en température, l'atmosphère réductrice est imposée par un balayage d'un mélange de 8% d'hydrogène dans de l'argon. La structure de l'échantillon a été vérifiée par diffraction RX et les raies correspondent à celles de la triphylite LiFePO$_4$ pure. L'échantillon préparé est composé de très fines particules de l'ordre du micron (Figure 2). Ces particules sont recouvertes d'une fine couche de carbone dont le poids représente 1,2% du poids total de l'échantillon, mesuré par gravimétrie après dissolution du noyau de LiFePO$_4$ dans l'acide chlorhydrique 2M.

Le matériau présente une conductivité électronique de surface. Cette dernière a été mesurée suivant la procédure décrite dans l'exemple 1'. Dans ces conditions, la conductivité électronique mesurée est de $2.10^{-3}$ S.cm$^{-1}$.

Compte tenu de la quantité résiduelle de carbone dans l'échantillon, le rendement de carbonisation de l'acétate de cellulose lors de cette synthèse est de 20%. Il est important de noter que ce rendement est identique à celui obtenu dans l'exemple 1' où la triphylite LiFePO$_4$ est déjà formée et ne nécessite aucune étape de réduction.

Il est donc évident que le carbone issu de la décomposition de l'acétate de cellulose n'est pas consommé et n'intervient pas dans la réaction de réduction du fer III en fer II. Cette réduction se fait donc par l'intermédiaire de la phase gazeuse.

Exemple 2' Comparaison du comportement électrochimique de la triphylite LiFePO$_4$ carbonée préparée à l'exemple 1 avec celui d'un échantillon de triphylite carboné synthétisé par une autre voie.

Le matériau préparé à l'exemple 2 a été testé dans des piles boutons du type CR 2032 décrites dans l'exemple 1". Pour comparaison, nous reportons également quelques résultats obtenus pour le meilleur échantillon carboné synthétisé à partir de fer II (vivianite Fe$_3$(PO$_4$)$_2$.8H$_2$O) et dont la synthèse a été décrite antérieurement dans CA-A-2.270.771.

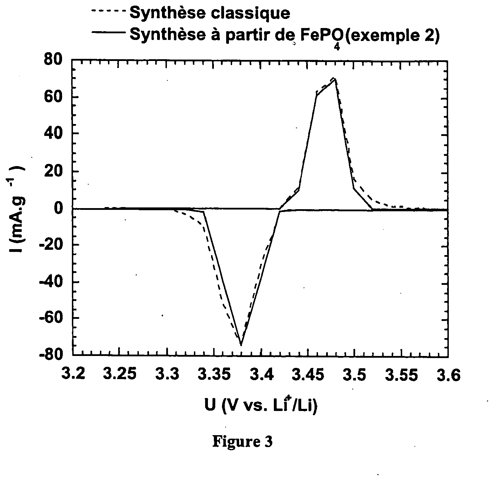

La Figure 3 présente le 5ème cycle obtenu par voltammétrie lente (20 mV.h$^{-1}$) contrôlée par un cycleur de batterie de type Macpile® avec l'échantillon issu de la synthèse classique (traits pointillés) d'une part et avec celui obtenu exemple 2 (traits pleins) d'autre part. Les deux synthèses conduisent à des échantillons ayant le même comportement électrochimique sur le plan des potentiels d'oxydoréduction et des cinétiques électrochimiques.

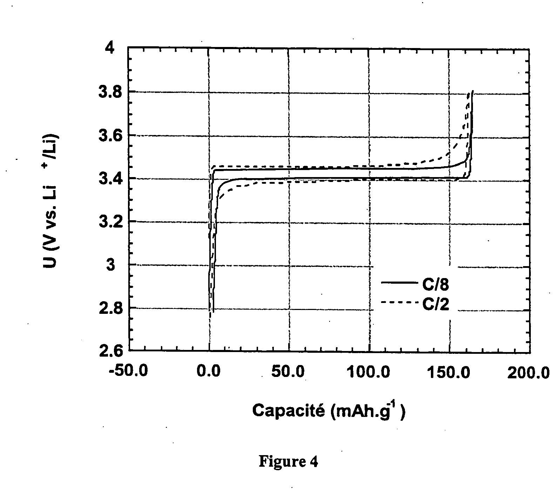

Les profils de charge et de décharge de batteries assemblées avec l'échantillon issu de la synthèse décrite dans l'exemple 2 sont présentés figure 4 pour deux régimes. Ces résultats sont obtenus en mode galvanostatique entre 2,8 et 3,8 Volts pour deux vitesses de charge et décharge C/8 et C/2 (le courant imposé (exprimé en mA) lors de la charge ou de la décharge correspond à 1/8 (respectivement 1/2) de la capacité théorique de la batterie exprimées en mAh). Nous avons reporté le 20 ème cycle et dans les deux cas le plateau de décharge est plat et les capacités mises en jeu correspondent à 95 % de la capacité théorique.

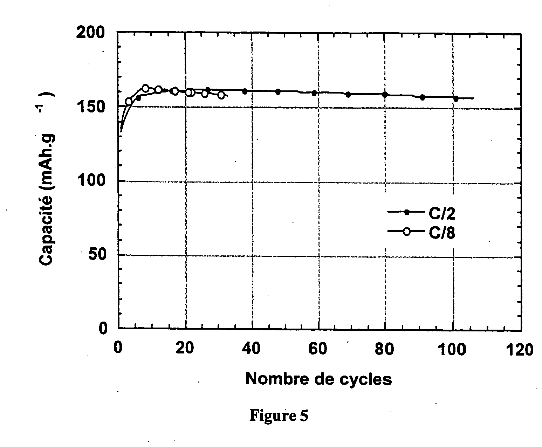

L'évolution des capacités échangées lors de la décharge est représentée figure 5. Dans les deux cas, la capacité initiale est d'environ 80 % de la capacité théorique mais, après une dizaine de cycles, elle est supérieure à 95 % c'est-à-dire à 160 mAh.g$^{-1}$, et reste stable sur la durée de l'expérience. Ces résultats sont comparables à ceux obtenus avec la synthèse classique (réaction du phosphate de fer divalent (vivianite) avec le phosphate de lithium).

Exemple 3 : Contrôle de la quantité de carbone

Des échantillons de triphylite avec différentes teneurs en carbone ont été préparés par réaction de FePO$_4$.2H$_2$O et Li$_2$CO$_3$ en présence d'un mélange CO/CO$_2$ 1/1 en volume. Cette atmosphère a été choisie pour son pouvoir réducteur vis à vis du fer III, tout en maintenant une stabilité du fer II en particulier en fin du cycle de montée en température de synthèse à 700 °C. Dans une première étape, les quantités stœchiométriques des deux composés ainsi que l'acétate de cellulose sont broyées ensemble dans l'isopropanol. Les quantités d'acétate de cellulose ajoutées représentent 2,4 et 5 % respectivement du poids du mélange. Après séchage ces mélanges sont chauffés progressivement (6 °C par minute jusqu'à 700°C) dans un four tubulaire sous balayage du gaz réducteur (CO/CO$_2$ : 1/1). Cette température est maintenue pendant une heure. L'échantillon est refroidi en 40 minutes soit avec une vitesse de refroidissement d'environ 15 °C par minute. Durant tout le traitement thermique et également y compris lors de la descente en température, le flux de gaz réducteur est maintenu. La durée totale du traitement thermique est d'environ 3 heures et demie.

La structure des échantillons a été vérifiée par diffraction RX et les raies correspondent dans tous les cas à celles de la triphylite LiFePO$_4$ pure.

Les teneurs de carbone ont été déterminées par analyse élémentaire. Les résultats ainsi que les conductivités électroniques des échantillons sont reportées dans le tableau 1 suivant.

Tableau 1

| % acétate cellulose | Teneur en C | Rendement (C) | conductivité |
|---|---|---|---|
| 2 | 0,62 | 0,22 | 2.10$^{-6}$ S.cm$^{-1}$ |
| 4 | 1,13 | 0,2 | 1.10$^{-3}$ S.cm$^{-1}$ |
| 5 | 1,35 | 0,19 | 4.10$^{-2}$ S.cm$^{-1}$ |

Dans les trois cas le rendement de carbonisation (rendement (C) du tableau 1 de l'acétate de cellulose est proche de 20%.

La quantité de carbone résiduel influe de façon importante sur la conductivité électronique. Comme on peut le noter, les quantités de carbone conducteur sont proportionnelles à la quantité de précurseur ajouté (acétate de cellulose). Ceci démontre d'une manière formelle que le carbone conducteur ne participe pas à la réduction du Fer (III) en présence d'atmosphère gazeuse réductrice, cette dernière réduisant le composé du fer avec une cinétique plus rapide.

Exemple 3' - Comparaison du comportement électrochimique des échantillons de triphylite carbonée préparée à l'exemple 3.

Les matériaux préparés à l'exemple 3 ont été testés dans des piles boutons du type CR 2032 décrites dans l'exemple 1".

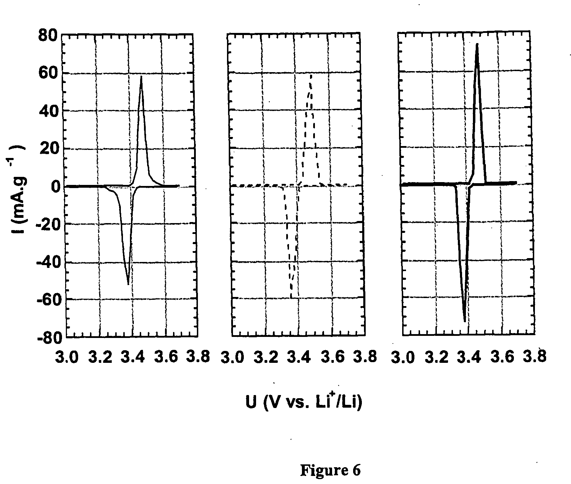

La Figure 6 présente le 5ème cycle obtenu par voltammétrie lente (20 mV.h$^{-1}$) contrôlée par un cycleur de batterie de type Macpile® avec :

- l'échantillon contenant 0,62% en carbone (traits pleins);
- l'échantillon contenant 1,13% en carbone (traits pointillés); et
- l'échantillon contenant 1,35% de carbone (traits gras).

Les principales caractéristiques du comportement électrochimique de ces échantillons sont résumées dans le tableau 2 suivant :

Tableau 2

| % carbone | 0.62 | 1.13 | 1.35 |
|---|---|---|---|
| Capacité (mAh.g$^{-1}$) | 150 | 160 | 163 |
| % capacité théorique | 88 | 94 | 96 |
| I pic (mA) | 52 | 60 | 73 |

La quantité de carbone résiduelle influe de façon significative sur la capacité des échantillons. De plus, l'augmentation du courant de pic avec le taux de carbone traduit une amélioration des cinétiques de réactions. Cette dernière reflète l'augmentation de la conductivité électronique avec le taux de carbone explicité à l'exemple 3.
La voie de synthèse décrite dans l'exemple 3 permet de contrôler de façon fiable et reproductible le taux de carbone dans le matériau final. Ce qui est primordiale compte tenu de l'influence du taux de carbone sur les propriétés électrochimiques.

**Exemple 4 - Contre- exemple de réduction par le carbone**

LiFePO$_4$ a été préparé par réaction de FePO$_4$.2H$_2$O et Li$_2$CO$_3$ en présence de carbone, sous atmosphère inerte suivant la procédure décrite dans la demande PCT portant le numéro WO 01/53198.
Le produit stable de l'oxydation du carbone est CO$_2$ au dessous de 710°C et CO au dessus. De plus, au dessus de 400 °C, CO$_2$ réagit sur l'excès de carbone pour former CO. Cette dernière réaction est équilibrée et le ratio CO/CO$_2$ dépend de la température. Il est donc délicat de déterminer la quantité de carbone à ajouter au mélange FePO$_4$.2H$_2$O et Li$_2$CO$_3$. Si seul CO$_2$ est produit, 1/4 de mole de carbone suffit pour réduire une mole de fer III en fer II, et si seul CO est produit, 1/2 mole de carbone est nécessaire pour la même réaction.
Cette synthèse a été réalisée pour deux compositions de mélange différentes : Premier mélange (mélange 4A), identique à celui du brevet WO 01/53198

   1 mole de FePO$_4$.2H$_2$O
   1/2 mole de Li$_2$CO$_3$.
   1 mole de C

Dans le cas ou seul CO serait produit lors de la réduction du fer III cette stœchiométrie correspondrait à un excès de carbone de 100%.
Deuxième mélange (mélange 4B)

   1 mole de FePO$_4$.2H$_2$O
   1/2 mole de Li$_2$CO$_3$
   1/2 mole de C

Mélange stœchiométrique si seul CO est produit lors de la réduction du fer.
La procédure de synthèse suivie est celle proposée dans WO 01/53198 : les mélanges ont été broyés dans l'isopropanol puis séchés. La poudre est alors pressée sous forme de pastille. Ces dernières sont placées dans un four tubulaire sous balayage d'argon. La température du four est amenée progressivement à 750 °C avec une vitesse de chauffe de 2°C par minute. L'échantillon est maintenu à 750°C pendant 8 heures selon WO 01/53198 avant d'être refroidi à 2°C par minute jusqu'à température ambiante. Durant toute la durée du traitement thermique, l'enceinte du four est balayée par un courant d'argon. La durée totale de ce traitement thermique est de 20 heures. Les pastilles sont ensuite pulvérisées. Les analyses élémentaires montrant que les deux échantillons contiennent du carbone sont rapportées dans le tableau 3 suivant :

Tableau 3

|  | Carbone initial (Mol) | Carbone final % échantillon | Carbone Résiduel (Mol) | Carbone consommé Mol |
|---|---|---|---|---|
| Echantillon A | 1 | 5,87 | 0,82 | 0,18 |
| Echantillon B | 0,5 | 1,7 | 0,23 | 0,27 |

La synthèse B montre que seulement environ 1/4 de mole de carbone, par transformation en $CO_2$ a été consommée pour réduire une mole de fer III en fer II, bien que la température finale soit supérieure à 710 °C. Ce qui confirme la difficulté de contrôler la stœchiométrie par ce mode de réduction.

Lors de la synthèse de l'échantillon A réalisée selon l'enseignement de WO 01/53198 la quantité de carbone consommée est insuffisante pour que la réaction de réduction du fer III en fer II ait été complète. En augmentant la quantité de carbone, on diminue la probabilité d'avoir les points de contact triples entre phosphate de fer, carbonate de lithium et carbone nécessaire à la formation de $LiFePO_4$.

Lors de cette synthèse, le rendement maximum de formation de $LiFePO_4$ est de 80 %. En tenant compte du carbone résiduel présent, la pureté de l'échantillon A est d'environ 75%. Cette considération corrobore l'activité électrochimique médiocre de 70% obtenue selon l'enseignement de WO 01/53198.

**Exemple 4' - Comportement électrochimique de l'échantillon B synthétisé dans l'exemple 4**

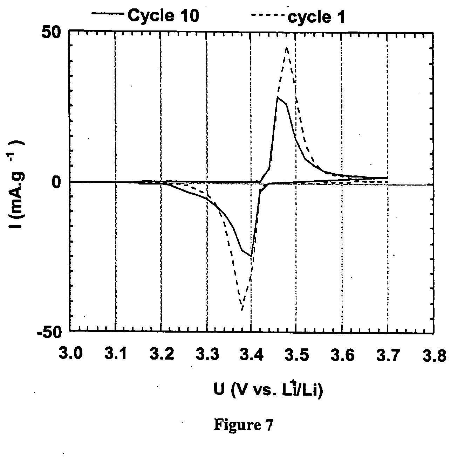

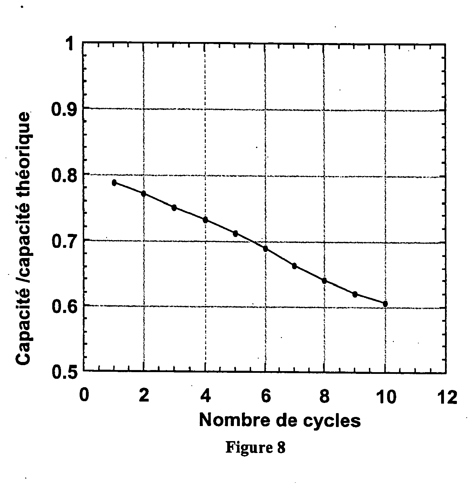

Le matériau 4B préparé à l'exemple 4 a été testé dans des piles boutons du type CR 2032 décrites dans l'exemple 1". La figure 7 présente le premier (traits pointillés) et le 10<sup>ème</sup> (traits pleins) cycles obtenus par voltamétrie lente (20 mV.h$^{-1}$) contrôlée par un cycleur de batterie de type Macpile® La Figure 8 illustre l'évolution de la capacité de la batterie avec le cyclage.

Ces deux figures montrent une détérioration rapide du comportement électrochimique de l'échantillon. Les cinétiques sont plus lentes dès le 10<sup>ème</sup> cycle. De plus après 10 cycles, la batterie a perdu 23% de sa capacité initiale. Ce comportement est généralement observé pour des échantillons de $LiFePO_4$ non recouvert de carbone. Le carbone résiduel, dispersé dans le matériau, n'a pas le même effet bénéfique que le carbone enrobant les grains de $LiFePO_4$ et provenant de la décomposition d'une substance organique.

**Exemple 5 : Réduction par les substances produites lors de la décomposition d'une substance organique.**

Réduction par l'acétate de cellulose (39,7% en poids de groupements acétyle)

Dans une première étape, les quantités stœchiométriques des deux composés $FePO_4.2H_2O$ et $Li_2CO_3$ ainsi que l'acétate de cellulose sont broyées ensemble dans l'acétone. La quantité d'acétate de cellulose ajoutée représente S % du poids du mélange initial.

Par exemple :

$FePO_4.2H_2O$: 186.85 g
$Li_2CO_3$ : 36.94 g
Acétate de cellulose 11.19 g

Après séchage, le mélange est placé dans un four tubulaire sous balayage d'argon UHP (ultra High Purity) ; ce gaz circule de plus à travers un piège à oxygène dont la teneur résiduelle est < 1vpm). Le four est chauffé progressivement à 6°C par minutes jusqu'à 200°C. Cette température est maintenue 20 minutes pour déshydrater le phosphate de fer. La température est augmentée avec la même vitesse de chauffe jusqu'à 400°C. Cette température est maintenue 20 minutes pour décomposer l'acétate de cellulose et le carbonate de lithium. Après une troisième rampe à 6°C par minutes jusqu'à 700°C, où l'échantillon est maintenu une heure pour undure une meilleure cristallinité, l'échantillon est refroidi progressivement. Durant tout le traitement thermique et également y compris lors de la descente en température, le flux de gaz inerte est maintenu.

La structure des échantillons a été vérifiée par diffraction RX et les raies correspondent dans tous les cas à celles de la triphylite $LiFePO_4$ pure.

L'analyse élémentaire montre que l'échantillon contient 0.74% de carbone (0.098 mole de carbone par mole de $LiFePO_4$).

La conductivité électronique mesurée comme décrit dans l'exemple l'est 5.10$^{-4}$ S.cm$^{-1}$.

Le rendement de carbonisation de l'acétate de cellulose donné dans la littérature est de 24%. A partir des 11.19 g d'acétate de cellulose on doit obtenir 2.68g soit 0.22 mole de carbone. En fin de réaction il reste 0.098 mole de carbone. La quantité de carbone consommée n'est pas suffisante pour expliquer la réduction du fer III en fer II par le carbone.

Pour expliquer la réduction du fer III en fer II il faut considerer l'intervention d'une phase gazeuse locale réductrice provenant de la décomposition de l'acétate de cellulose.

L'acétate de cellulose peut s'écrire $C_6H_{10-x}O_5(CH_3CO)_x$ ; avec 39.7 % en poids de groupements acétyle, le calcul donne x = 2.44, la formule de ce produit est donc $C_6H_{7.56}O_5(CH_3CO)_{2.44}$ avec une masse molaire moyenne de 265.

L'acétate de cellulose étant un hydrate de carbone donc son pouvoir réducteur peut se calculer en ne tenant compte que du nombre d'atomes de carbone total soit 10.88 dans le produit utilisé. Avec un pouvoir réducteur de 4 électrons par mole de carbone.

Initialement le mélange contient $4.2 \cdot 10^{-2}$ Mole d'acétate de cellulose soit 0.459 Mol de carbone. Le produit final contient $9.8 \cdot 10^{-2}$ Mole de carbone. 0.36 Mole de carbone ont été consommée, ce qui est suffisant pour expliquer la synthèse de $LiFePO_4$ dans ces conditions.

**Exemple 5' : comportement électrochimique de l'échantillon de triphylite carbonée préparé à l'exemple 5.**

Le matériau préparé à l'exemple 5 a été testé dans des piles boutons du type CR 2032 décrites dans l'exemple 1".

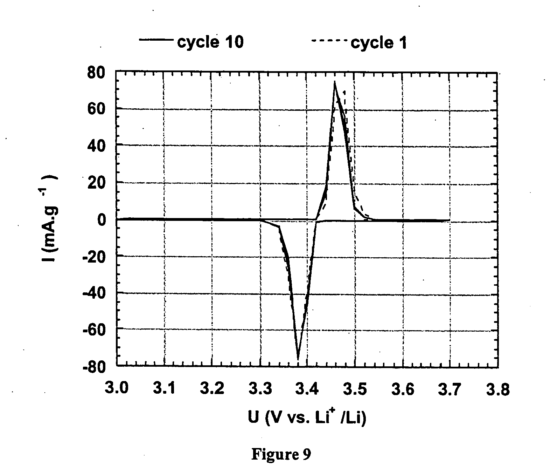

La figure 9 présente le cycle 1 et 10 obtenu par voltammétrie lente (20 mV.h$^{-1}$) contrôlée par un cycleur de batterie de type Macpile®. Les deux cycles sont superposés, ce qui indique une bonne cyclabilité. La capacité initiale de cet échantillon est 92 % de la capacité théorique. Cette capacité se maintient au cyclage. Bien qu'elle conduise à des échantillons de $LiFePO_4$ performants, la synthèse enseignée dans l'exemple 5 et relativement contraignante malgré sa simplicité au niveau du laboratoire. En effet, seul l'acétate de cellulose et, en fin de synthèse, le carbone résiduel peuvent tamponner l'atmosphère. Il est donc primordial de travailler avec des gaz neutres purifiés de toute trace d'eau et d'oxygène, ce qui est difficile à pratiquer au niveau industriel. Une variation de la pureté des gaz ou un manque d'étanchéité du four se traduira par l'obtention d'un produit oxydé.

**Exemple : 6 Préparation d'un phosphosulfate de fer de structure Nasicon :**

Dans un flacon en polypropylène de 500 ml sont ajoutés 9,4 g de phosphate de fer trivalent $FePO_4,2H_2O$, 7 g de sulfate de fer trivalent 4,4 g d'oxalate complexe d'ammonium et de titane $(NH_4)_2TiO(C_2O_4)_2$, 6,2g de sulfate d'ammonium et 8,9 g d'acétate de lithium, 1,7 g de sucrose et 250ml de méthyléthylcétone. Le mélange est mis à broyer sur des rouleaux en caoutchouc en présence de cylindres d'alumine ($\Phi$ = 10 mm, H = 10mm) pendant 48 heures. La suspension est mise a sécher et la poudre est re-broyée dans un mortier. La poudre obtenue est traitée à 400°sous air pendant 2 heures. Après refroidissement, le résidu de calcination est traité à 670 °C pendant une heure dans un four tubulaire sous atmosphère d'ammoniac dans de l'argon (5%), la montée en température étant de 5 °C par minute. Le balayage de gaz est maintenu au cours du refroidissement.

Le produit gris-noir obtenu a pour formule $Li_{1.35}Fe_{0.85}Ti_{0.15}SP_{0.5}O_6$ et contient 1,3% de carbone conducteur. Le matériau testé en tant qu'électrode dans les condition de l'exemple 1' a une capacité de 115 mAh dans la gamme de voltage 3,6 - 2,5 V.

**Exemple 7 : - Synthèse à partir d'un phosphate de fer non commercial préparé à partir de fer métallique**

Dans cet exemple, $LiFePO_4$ carboné a été synthétisé en partant d'un phosphate de fer non commercial et obtenu par l'action de l'acide phosphorique sur le fer métallique. La poudre de fer (325 mesh) a été mélangée à la quantité stœchiométrique d'une solution aqueuse préparée à partir d'une solution commerciale d'acide phosphorique 85 %. Le mélange a été maintenu sous agitation une nuit à température ambiante. Un barbotage d'oxygène permet d'oxyder le fer II passant en solution en fer III qui précipite avec l'ion phosphate. Après une nuit, la solution ne contient plus de fer métallique mais une poudre légèrement grise. Les solutions de fer II étant très sensibles à l'oxydation, la majorité du fer se trouve à l'état d'oxydation III. Dans certains cas, après dissolution du fer métallique sous barbotage d'oxygène, une oxydation supplémentaire a été réalisée par le peroxyde d'hydrogène pour s'assurer que tout le fer est à l'état d'oxydation III. La poudre en solution est dans ce cas légèrement jaune dû à des traces de peroxo complexes.

La quantité de lithium stœchiométrique calculée à partir de la quantité de fer métallique initiale a été ajouté sous forme de carbonate de lithium, ainsi que la source de carbone (alcohol polyvinylique hydrolysé à 87 % : 20% en poids par rapport au poids de fer initial), directement dans le mélange solution + poudre. Le broyage est réalisé dans ce milieu. Après évaporation de la solution aqueuse, les mélanges ont été soumis au traitement thermique décrit dans l'exemple 2.

Les produits obtenus contiennent 1.1 % en carbone (déterminé par analyse élémentaire). Leur conductivité électronique mesurée comme décrit dans l'exemple 1' est de 2.10$^{-3}$ S.cm$^{-1}$. Leur comportement électrochimique correspond à LiFePO$_4$ carboné. 90% de la capacité théorique est échangée de façon réversible au cour du cyclage.

## Exemple 8 : - Synthèse à partir d'un phosphate de fer non commercial préparé à partir de Fe$_2$O$_3$

Dans cet exemple, LiFePO$_4$ carboné a été synthétisé en partant d'un phosphate de fer non commercial et obtenu par l'action de l'acide phosphorique sur l'oxyde de fer Fe$_2$O$_3$. La poudre de Fe$_2$O$_3$ (<5 microns) a été mélangée à la quantité stœchiométrique d'une solution aqueuse préparée à partir d'une solution commerciale d'acide phosphorique 85 %. Le mélange a été maintenu sous agitation une nuit au reflux. Après une nuit, le mélange contient une poudre rose pâle. Comme précédemment, la quantité requise de carbonate de lithium ainsi que de la source de carbone (alcohol polyvinylique hydrolysé à 87 % : 15% en poids par rapport au poids de Fe$_2$O$_3$ initial), a été ajoutée directement à la solution contenant la poudre de phosphate de fer synthétisée. Après broyage, la solution aqueuse est évaporée. Le mélange est séché avant d'être soumis au traitement thermique décrit dans l'exemple 2.
Les produits obtenus contiennent 0.7 % en carbone (déterminé par analyse élémentaire). Leur conductivité électronique mesurée comme décrit dans l'exemple 1' est de 2.10$^{-5}$ S.cm$^{-1}$. Leur comportement électrochimique correspond à LiFePO$_4$ carboné. 85% de la capacité théorique est échangée de façon réversible au cour du cyclage.

## Exemple 9: Synthèse de LiFePO$_4$ carboné à partir de l'oxyde de fer FeOOH

LiFePO$_4$ carboné a été synthétisé par décomposition thermique de FeOOH (catalyst grade, 30 à 50 mesh) et LiH$_2$PO$_4$ en présence d'hydrogène (8% dans l'argon). Dans un premier temps, les quantités stœchiométriques des deux composés ainsi que la source de carbone (sucrose, 15% en poids par rapport au poids de FeOOH initial) sont broyés ensemble dans l'iso-propanol Le solvant est évaporé et le mélange soumis au traitement thermique décrit dans l'exemple 2.
L'échantillon résultant contient 0.8% de carbone.. Sa conductivité électronique mesurée comme décrit dans l'exemple 1' est de 6.10$^{-5}$ S.cm$^{-1}$. Son comportement électrochimique correspond à LiFePO$_4$ carboné. 92% de la capacité théorique est échangée de façon réversible au cours du cyclage.

## Exemple 10: - préparation de LiFe$_{0.5}$Mn$_{0.5}$PO$_4$ sons atmosphère réductrice.

LiFe$_{0.5}$Mn$_{0.5}$PO$_4$ a été préparé en mélangeant les quantités stoechiométriques de LiH$_2$PO$_4$, FeC$_2$O$_4$.2H$_2$O et (CH$_3$COO)$_2$Mn.4H$_2$O. Ces composés sont broyés dans l'heptane. Après séchage le mélange est chauffé progressivement jusqu'à 400°C sous air pour décomposer les groupements acétates et oxalates. Cette température est maintenue pendant 8 heures. Au cours de ce traitement, le fer II s'oxyde en fer III. Le mélange est ensuite rebroyé dans une solution d'acétone contenant le précurseur de carbone (acétate de cellulose 39.7% en poids de groupements acétyls) 5 % en poids par rapport au mélange). Après séchage, le mélange est traité thermiquement sous un balayage de CO/CO$_2$ 1/1 suivant le protocol décrit à l'exemple 3.
Le composé final contient 0.8 % en carbone. Sa conductivité électronique est 5.10$^{-4}$ S.cm$^{-1}$.

## Exemple 10': - performances d'une batterie contenant l'échantillon préparé à l'exemple 10

Le comportement électrochimique de l'échantillon LiFe$_{0.5}$Mn$_{0.5}$PO$_4$ a été évalué à température ambiante en batterie lithium contenant un électrolyte liquide.
Les cathodes sont constituées d'un mélange de matière active, de noir de carbone, et d'un agent liant (PVDF en solution dans la N-méthyl pyrolidone) dans les proportions 85 :5 :10. La composite est étendue sur un collecteur de courant en aluminium. Après séchage, des électrodes de 1,3 cm$^2$ et d'une capacité d'environ 1,6 mAh sont découpées à l'emporte-pièce. Les batteries sont assemblées en boîte à gants, sous atmosphère inerte.
Les mesures ont été réalisées dans un électrolyte contenant LiClO$_4$ 1M dans un mélange EC : DMC 1 : 1. L'anode est constituée de lithium. Les tests sont réalisés à température ambiante.
La Figure 8 présente les courbes de charge et de décharge d'une batterie cyclée en mode galvanostatique entre 3 et 4.3 Volts. Les régimes de charge et de décharge imposés correspodent à C/24 (la batterie est chargée en 24 heures puis déchargée pendant la même durée)
La courbe de décharge possède deux plateaux : le premier vers 4V correspond à la réduction du Manganèse III en manganèse II, et le deuxième vers 3.4 V correspond à la réduction du fer III en fer II. La capacité spécifique obtenu durant la décharge est 157 mAh.g$^{-1}$, ce qui correspond à 92% de la capacité théorique.
La réduction s'effectue en présence d'hydrogène (8% dans l'argon)

**Revendications**

1. Procédé de synthèse de composés de formule $LiM_{1-y}M'_y(XO_4)_n$ dans laquelle x, y et n sont des nombres tels que $0 \leq x \leq 2$, $0 \leq y \leq 0,6$ et $1 \leq n \leq 1,5$, M est un métal de transition ou un mélange de métaux de transition de la première ligne du tableau périodique, M' est un élément de valence fixe choisi parmi $Mg^{2+}$, $Ca^{2+}$; $Al^{3+}$, $Zn^{2+}$ ou une combinaison de ces mêmes éléments et X est choisi parmi S, P et Si,
   par mise en équilibre dans les proportions requises d'un mélange comprenant au moins:

   a) une source de M, une partie au moins du ou desdits métaux de transition qui omposent M se trouvant dans un état d'oxydation supérieur à celui du métal dans le composé final $LiM_{1-y}M'_y(XO_4)_n$ ;
   b) éventuellement une source d'un élément M' ;
   c) un composé source de lithium ; et
   d) un composé source de X,

   les sources des éléments M, M', Li et X pouvant ou non être introduites, en tout ou en partie, sous forme de composés comportant plus d'un élément source, et
   la synthèse se faisant par réaction et mise en équilibre du mélange intime et/ou homogène dans les proportions requises des précurseurs a) à d), et par réduction de manière à amener le ou les métaux de transition au degré de valence voulu,
   dans lequel la réduction du mélange des précurseurs a) à d) est réalisée avec une atmosphère gazeuse réductrice.

2. Procédé de synthèse selon la revendication 1, dans lequel le ou les métaux de transition est (sont) choisi(s) au moins en partie dans le groupe constitué par le fer, le manganèse, le cobalt et le nickel, le complément des métaux de transition étant choisi dans le groupe constitué par le vanadium, le titane, le chrome et le cuivre.

3. Procédé de synthèse selon la revendication 2, dans lequel le composé source de M est l'oxyde de fer III ou la magnétite, le dioxide de manganèse, le pentoxyde de di-vanadium, le phosphate de fer trivalent, le nitrate de fer trivalent, le sulfate de fer trivalent, l'hydroxyphosphate de fer et de lithium, le sulfate ou le nitrate de fer trivalent, ou un mélange de ces derniers.

4. Procédé de synthèse selon l'une quelconque des revendications 1 à 3, dans lequel le composé source de lithium est choisi dans le groupe constitué par l'oxyde ou l'hydroxyde de lithium, le carbonate de lithium, le phosphate neutre $Li_3PO_4$, le phosphate acide $LiH_2PO_4$, l'ortho, le méta ou les polysilicates de lithium, le sulfate de lithium, l'oxalate de lithium et l'acétate de lithium, ou un mélange de ces derniers.

5. Procédé de synthèse selon l'une quelconque des revendications 1 à 4, dans lequel la source de X est choisie dans le groupe constitué par l'acide sulfurique, le sulfate de lithium, l'acide phosphorique et ses esters, le phosphate neutre $Li_3PO_4$ ou le phosphate acide $LiH_2PO_4$, les phosphates mono- ou diammoniques, le phosphate de fer trivalent, le phosphate de manganèse et d'ammonium ($NH_4MnPO_4$), la silice, les silicates de lithium, les alcoxysilanes et leurs produits d'hydrolyse partielle et les mélanges de ces derniers.

6. Procédé de synthèse selon l'une quelconque des revendications 1 à 5, dans lequel la réduction est obtenue par l'action d'une atmosphère réductrice choisie de façon à pouvoir réduire l'état d'oxydation de l'ion métallique M au niveau requis pour la constitution du composé sans toutefois le réduire à l'état métallique neutre.

7. Procédé selon l'une quelconque des revendications 1 à 6, dans lequel un traitement thermique est réalisé par chauffage depuis la température ordinaire jusqu'à une température comprise entre 500 et 1.100 °C.

8. Particules d'un composé de formule $LiM_{1-y}M'_y(XO_4)_n$ dans laquelle x, y et n sont des nombres tels que $0 \leq x \leq 2$, $0 \leq y \leq 0,6$ et $1 \leq n \leq 1,5$, M est un métal de transition ou un mélange de métaux de transition de la première ligne du tableau périodique, M'est un élément de valence fixe choisi parmi $Mg^{2+}$, $Ca^{2+}$; $Al^{3+}$, $Zn^{2+}$ et X est choisi parmi S, P et Si, les dites particules ayant une taille comprise entre 0,05 $\mu m$ et 15 $\mu m$, de préférence entre 0,1 et 10 micromètres et les dites particules ayant une conductivité, mesurée sur un échantillon de poudre compactée à une pression supérieure ou égale à 3000 $Kg.cm^{-2}$, qui est supérieure à $10^{-8}$ $S.cm^{-1}$.

9. Cellule électrochimique comprenant au moins deux électrodes et au moins un électrolyte, **caractérisée en ce qu'**au moins une de ses électrodes comprend au moins un matériau selon la revendication 8.

**Patentansprüche**

1. Verfahren zur Synthese von Verbindungen der Formel $Li_xM_{1-y}M'_y(XO_4)_n$, in welcher x, y und n so ausgewählt sind, dass $0 \leq x \leq 2$, $0 \leq y \leq 0,6$ und $1 \leq n \leq 1,5$ sind, M ein Übergangsmetall oder eine Mischung von Übergangsmetallen der ersten Reihe des Periodensystems ist; M' ein Element mit definierter Valenz ausgewählt aus $Mg^{2+}$, $Ca^{2+}$, $Al^{3+}$, $Zn^{2+}$ oder eine Kombination dieser Elemente ist, und X ausgewählt ist aus S, P und Si, wobei eine Mischung ins Gleichgewicht gebracht wird, die in den erforderlichen Anteilen zumindest umfasst:

   a) eine Quelle für M, wobei ein Teil des oder der Übergangsmetalle, die M umfassen, sich in einer Oxidationsstufe über derjenigen des Metalls in der finalen Zusammensetzung $Li_xM_{1-y}M'_y(XO_4)_n$ befinden;
   b) eventuell eine Quelle eines Elements M';
   c) eine Ausgangsverbindung von Lithium; und
   d) eine Ausgangsverbindung von X;

   wobei die Quellen der Elemente M, M', Li und X teilweise oder vollständig in Form von Verbindungen, die mehr als ein Ausgangselement umfassen, eingeführt werden können oder nicht, und die Synthese durch Reaktion und ins Gleichgewichtbringen der innig durchmischten und/oder homogenen Mischung in den erforderlichen Verhältnissen der Vorstufen a) bis d), und durch Reduktion auf eine Weise, die das oder die Übergangsmetalle auf den gewünschten Valenzgrad bringt, durchgeführt wird, wobei die Reduktion der Mischung der Vorstufen a) bis d) mit einer reduzierenden Gasatmosphäre durchgeführt wird.

2. Syntheseverfahren nach Anspruch 1, wobei das oder die Übergangsmetalle zumindest teilweise ausgewählt ist (sind) aus der Gruppe bestehend aus Eisen, Mangan, Kobalt und Nickel, und der Rest der Übergangsmetalle ausgewählt ist aus der Gruppe bestehend aus Vanadium, Titan, Chrom, und Kupfer.

3. Syntheseverfahren nach Anspruch 2, wobei die Ausgangsverbindung von M Eisen-III-Oxid oder Magnetit, Mangandioxid, Divanadiumpentoxid, dreiwertiges Eisenphosphat, dreiwertiges Eisennitrat, dreiwertiges Eisensulfat, Eisen- und Lithiumhydroxyphosphat, dreiwertiges Eisensulfat oder -nitrat oder eine Mischung davon ist.

4. Syntheseverfahren nach einem der Ansprüche 1 bis 3, wobei die Ausgangsverbindung von Lithium ausgewählt ist aus der Gruppe bestehend aus Lithiumoxid oder -hydroxid, Lithiumcarbonat, neutralem Phosphat $Li_3PO_4$, saurem Phosphat $LiH_2PO_4$, Lithium-ortho-, -meta- oder -polysilikaten, Lithiumsulfat, Lithiumoxalat und Lithiumacetat oder einer Mischung davon.

5. Syntheseverfahren nach einem der Ansprüche 1 bis 4, wobei die Quelle von X ausgewählt ist aus der Gruppe bestehend aus Schwefelsäure, Lithiumsulfat, Phosphorsäure und ihren Estern, neutralem Phosphat $Li_3PO_4$ oder saurem Phosphat $LiH_2PO_4$, Mono- oder Diammoniumphosphaten, dreiwertigem Eisenphosphat, Ammoniummanganphosphat ($NH_4MnPO_4$), Kieselsäure, Lithiumsilikaten, Alkoxysilanen und ihren Produkten nach partieller Hydrolyse und Mischungen davon.

6. Syntheseverfahren nach einem der Ansprüche 1 bis 5, wobei die Reduktion durch Einwirken einer reduzierenden Atmosphäre, die so ausgewählt ist, dass sie in der Lage ist, den Oxidationszustand des Metallions M auf ein Stufe zu reduzieren, die für die Bildung der Verbindung notwendig ist, ohne es auf den metallischen neutralen Zustand zu reduzieren, erhalten wird.

7. Verfahren nach einem der Ansprüche 1 bis 6, wobei eine thermische Behandlung durch Erhitzen von der Normaltemperatur auf eine Temperatur zwischen 500 und 1.100 °C durchgeführt wird.

8. Partikel einer Verbindung der Formel $Li_xM_{1-y}M'_y(XO_4)_n$, in welcher x, y und n so ausgewählt sind, dass $0 \leq x \leq 2$, $0 \leq y \leq 0,6$ und $1 \leq n \leq 1,5$ sind, M ein Übergangsmetall oder eine Mischung von Übergangsmetallen der ersten Reihe des Periodensystems ist; M' ein Element mit definierter Valenz ausgewählt ist aus $Mg^{2+}$, $Ca^{2+}$, $Al^{3+}$, $Zn^{2+}$, und X ausgewählt ist aus S, P und Si, wobei die Partikel eine Größe zwischen 0,05 $\mu$m und 15 $\mu$m, vorzugsweise zwischen 0,1 und 10 Mikrometern aufweisen und wobei die Partikel eine elektrische Leitfähigkeit, gemessen an einer bei einem Druck von 3000 $kg.cm^{-2}$ oder mehr verdichteten Pulverprobe, von mehr als $10^{-8}$ S $cm^{-1}$ aufweisen.

9. Elektrochemische Zelle, die mindestens zwei Elektroden und mindestens einen Elektrolyt umfasst, **dadurch gekennzeichnet, dass** mindestens eine der Elektroden mindestens ein Material nach Anspruch 8 umfasst.

**Claims**

1. Method for the synthesis of compounds of the formula $Li_xM_{1-y}M'_y(XO_4)_n$, wherein x, y and n are selected such that $0 \leq x \leq 2$, $0 \leq y \leq 0.6$ and $1 \leq n \leq 1.5$, M is a transition metal or a mixture of transition metals of the first series of the periodic table; M' is an element with defined valency selected from $Mg^{2+}$, $Ca^{2+}$, $Al^{3+}$, $Zn^{2+}$ or a combination of these elements, and X is selected from S, P and Si,
   wherein a mixture is brought into equilibrium which, in the required proportions, comprises at least:

   a) a source for M, a portion of the transition metal or metals comprising M being in an oxidation state higher than that of the metal in the final composition $Li_xM_{1-y}M'_y(XO_4)_n$;
   b) possibly a source of an element M';
   c) a source compound of lithium;
   d) a source compound of X;

   wherein the sources of the elements M, M', Li and X may or may not be partly or completely introduced in the form of compounds comprising more than one starting element, and
   the synthesis is carried out by reaction and bringing into equilibrium the intimately mixed and/or homogeneous mixture in the required proportions of the precursors a) to d), and by reduction in a manner to bring the transition metal or metals to the desired valence degree,
   wherein the reduction of the mixture of precursors a) to d) is carried out with a reducing gas atmosphere.

2. The synthesis method according to claim 1, wherein the transition metal or metals is (are) at least partially selected from the group consisting of iron, manganese, cobalt and nickel, and the remainder of the transition metals is selected from the group consisting of vanadium, titanium, chromium, and copper.

3. The synthesis method according to claim 2, wherein the source compound of M is iron III oxide or magnetite, manganese dioxide, divanadium pentoxide, trivalent iron phosphate, trivalent iron nitrate, trivalent iron sulfate, iron and lithium hydroxy phosphate, trivalent iron sulfate or nitrate, or a mixture thereof.

4. The synthesis method according to any one of claims 1 to 3, wherein the source compound of lithium is selected from the group consisting of lithium oxide or hydroxide, lithium carbonate, neutral phosphate $Li_3PO_4$, acid phosphate $LiH_2PO_4$, lithium ortho-, meta- or polysilicates, lithium sulfate, lithium oxalate and lithium acetate or a mixture thereof.

5. The synthesis method according to any one of claims 1 to 4, wherein the source of X is selected from the group consisting of sulfuric acid, lithium sulfate, phosphoric acid and esters thereof, neutral phosphate $Li_3PO_4$ or acid phosphate $LiH_2PO_4$, mono- or diammonium phosphates, trivalent iron phosphate, ammonium manganese phosphate ($NH_4MnPO_4$), silica, lithium silicates, alkoxysilanes and their products of partial hydrolysis and mixtures thereof.

6. The synthesis method according to any one of claims 1 to 5, wherein the reduction is obtained by action of a reducing atmosphere selected such that it is capable of reducing the oxidation state of the metal ion M to a level required for the formation of the compound without reducing it to the metallic neutral state.

7. The method according to any one of claims 1 to 6, wherein a thermal treatment is carried out by heating from the ordinary temperature to a temperature between 500 and 1,100 °C.

8. Particles of a compound of the formula $Li_xM_{1-y}M'_y(XO_4)_n$, in which x, y and n are selected such that $0 \leq x \leq 2$, $0 \leq y \leq 0.6$ and $1 \leq n \leq 1.5$, M is a transition metal or a mixture of transition metals of the first series of the periodic table; M' is an element with defined valency selected from $Mg^{2+}$, $Ca^{2+}$, $Al^{3+}$, $Zn^{2+}$, and X is selected from S, P and Si, wherein the particles have a size between 0.05 $\mu m$ and 15 $\mu m$, preferably between 0.1 and 10 micrometers, and wherein the particles have a conductivity, measured on a powder sample compressed at a pressure of 3000 $kg \cdot cm^{-2}$ or more, of more than $10^{-8}$ S cm$^{-1}$.

9. An electrochemical cell comprising at least two electrodes and at least one electrolyte, **characterized in that** at least one of the electrodes comprises at least a material according to claim 8.

Figure 1

Figure 2

Figure 3

Figure 4

Figure 5

Figure 6

Figure 7

Figure 8

Figure 9

**Figure 10**

Figure 11. Micrographie au microscope électronique à transmission montrant l'enrobage et le pontage des particules de LiFePO$_4$ par le carbone.

## RÉFÉRENCES CITÉES DANS LA DESCRIPTION

**Documents brevets cités dans la description**

- US 5910382 A
- CA 2307119 A
- CA 2270771 A
- EP 1094532 A
- EP 1094533 A
- WO 0153198 PCT
- US 7550098 B
- WO 0153198 A

**Littérature non-brevet citée dans la description**

- *Electrochem and Solid-State Letters,* 2000, vol. 3, 66
- *Proc. 10th IMLB,* Mai 2000
- **YAMADA et al.** *J. electrochem Soc.,* 2001, vol. 148, A224
- **C.A. VINCENT ; B. SCROSATI.** Modem Batteries. Arnold publishers, 1997